(19) Europäisches Patentamt
European Patent Office
Office européen des brevets

(11) **EP 3 349 281 B1**

(12) **EUROPEAN PATENT SPECIFICATION**

(45) Date of publication and mention
of the grant of the patent:
**25.03.2020 Bulletin 2020/13**

(51) Int Cl.:
*H01M 4/86* (2006.01)      *H01M 4/88* (2006.01)
*H01M 8/02* (2016.01)      *H01M 8/10* (2016.01)
*H01M 8/1004* (2016.01)      *H01M 8/1018* (2016.01)
*H01M 8/1027* (2016.01)      *H01M 8/1034* (2016.01)
*H01M 8/1039* (2016.01)      *H01M 4/90* (2006.01)
*H01M 4/92* (2006.01)

(21) Application number: **15903582.3**

(22) Date of filing: **09.09.2015**

(86) International application number:
**PCT/JP2015/075644**

(87) International publication number:
**WO 2017/042919 (16.03.2017 Gazette 2017/11)**

(54) **ELECTRODE CATALYST LAYER FOR FUEL CELL, METHOD FOR MANUFACTURING SAME, MEMBRANE ELECTRODE ASSEMBLY IN WHICH SAID CATALYST LAYER IS USED, FUEL CELL, AND VEHICLE**

ELEKTRODENKATALYSATORSCHICHT FÜR EINE BRENNSTOFFZELLE, VERFAHREN ZUR HERSTELLUNG DAVON, MEMBRANELEKTRODENANORDNUNG MIT DARIN VERWENDETER KATALYSATORSCHICHT, BRENNSTOFFZELLE UND FAHRZEUG

COUCHE DE CATALYSEUR D'ÉLECTRODE POUR PILE À COMBUSTIBLE, SON PROCÉDÉ DE FABRICATION, ASSEMBLAGE ÉLECTRODE-MEMBRANE UTILISANT LADITE COUCHE DE CATALYSEUR, PILE À COMBUSTIBLE, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.07.2018 Bulletin 2018/29**

(73) Proprietor: **Nissan Motor Co., Ltd.**
**Yokohama-shi, Kanagawa 221-0023 (JP)**

(72) Inventors:
• **TAKAHASHI, Shinichi**
  **Atsugi-shi**
  **Kanagawa 243-0123 (JP)**
• **MASHIO, Tetsuya**
  **Atsugi-shi**
  **Kanagawa 243-0123 (JP)**

• **HORAI, Atsushi**
  **Atsugi-shi**
  **Kanagawa 243-0123 (JP)**
• **OHMA, Atsushi**
  **Atsugi-shi**
  **Kanagawa 243-0123 (JP)**

(74) Representative: **Hoefer & Partner Patentanwälte mbB**
**Pilgersheimer Straße 20**
**81543 München (DE)**

(56) References cited:
**EP-A1- 3 214 679        EP-A1- 3 214 681**
**WO-A1-2014/175097      WO-A1-2014/175099**
**JP-A- H07 254 419       JP-A- 2004 119 065**
**JP-A- 2005 294 175      JP-A- 2007 095 582**
**JP-A- 2011 142 009**

**Description**

**TECHNICAL FIELD**

The present invention relates to an electrode catalyst layer used for a fuel cell (particularly, PEFC) and a manufacturing method therefor, and a membrane electrode assembly, a fuel cell, and a vehicle using the catalyst layer.

**BACKGROUND ART**

A polymer electrolyte fuel cell using a proton conductive solid polymer membrane operates at a low temperature as compared to other types of fuel cells, for example, a solid oxide fuel cell, a molten carbonate fuel cell, and the like. For this reason, the polymer electrolyte fuel cell has been expected to be used as a stationary power source or a mobile power source for automobiles and the like, and practical uses thereof have also been started.

In general, such a polymer electrolyte fuel cell uses an expensive metal catalyst represented by platinum (Pt) or a Pt alloy, which leads to high cost of such a fuel cell. Therefore, development of manufacturing techniques for an electrode catalyst layer capable of lowering the cost of the fuel cell by reducing an amount of a noble metal catalyst used and excellent in power generation performance has been required.

For example, Patent Literature 1 describes a catalyst layer including catalyst-carrying particles having a catalyst carried on conductive carrier particles and a proton conductor. The catalyst layer described in Patent Literature 1 includes a crystallized proton conductor covering a portion of the surface of the catalyst-carrying particles and a non-crystallized proton conductor covering a portion of the surface of a composite containing the catalyst-carrying particles and the crystallized proton conductor.

Citation List

Patent Literature

Patent Literature 1: JP 2013-020816 A

Prior art document EP 3 214 679 A discloses an electrode catalyst layer having an improved gas transportability by using an electrode catalyst layer for fuel cell comprising a catalyst containing a catalyst carrier and a catalytic metal carried on the catalyst carrier and an electrolyte, wherein the catalyst partially is coated with the electrolyte, and a specific surface area of the catalytic metal which gas can reach without passing through an electrolyte is 50% or more, with respect to the total specific surface area of the catalytic metal.

Prior art document EP 3 214 681 A1 suggests a catalyst layer for fuel cell which has a high catalytic activity and enables maintaining the high catalytic activity. Disclosed is an electrode catalyst layer for fuel cell including a catalyst containing a catalyst carrier having carbon as a main component and a catalytic metal supported on the catalyst carrier, and a polymer electrolyte having a sulfonic acid group ($-SO_3H$) as an ion exchange group, in which the catalyst has the R' (D'/G intensity ratio) of 0.6 or less, which is the ratio of D' band peak intensity (D' intensity) measured in the vicinity of 1620 $cm^{-1}$ relative to G band peak intensity (G intensity) measured in the vicinity of 1580 $cm^{-1}$ by Raman spectroscopy, and has BET specific surface area of 900 $m^2/g$ catalyst carrier or more, and mole number of a sulfonic acid group in the polymer electrolyte relative to weight of the catalyst carrier is 0.7 mmol/g or more and 1.0 mmol/g or less.

**SUMMARY OF INVENTION**

However, in the fuel cell electrode catalyst layer of the related art, sufficient power generation performance cannot be achieved in a high-humidity environment (for example, 100% RH) in some cases.

In this regard, the present invention has been made in view of the above-described circumstances and an object thereof is to provide a fuel cell electrode catalyst layer exhibiting excellent power generation performance in a high-humidity environment (for example, 100% RH).

The object underlying the present invention is achieved by a fuel cell electrode catalyst layer according to independent claim 1 and by a method for manufacturing a fuel cell electrode catalyst layer according to independent claim 7. Preferred embodiments are defined in the respective dependent claims.

The present inventors have conducted intensive studies to solve the above-described problem. As a result, they have found that the above-described problem can be solved by a fuel cell electrode catalyst layer including a catalyst carrier having a large specific surface area and a polymer electrolyte having a form in which at least a portion thereof is agglomerated, and eventually the present invention has been completed.

## BRIEF DESCRIPTION OF DRAWINGS

Fig. 1 is a schematic cross-sectional view illustrating a basic configuration of a polymer electrolyte fuel cell according to an embodiment of the present invention.
Fig. 2 is a schematic explanatory cross-sectional view illustrating shapes and structures of catalysts (a) and (c).
Fig. 3 is a schematic explanatory cross-sectional view illustrating a shape and a structure of catalyst (b).
Fig. 4 is a schematic explanatory cross-sectional view illustrating a shape and a structure of a fuel cell electrode catalyst layer according to an embodiment of the present invention.
Fig. 5 is a conceptual diagram illustrating a local I/C ratio.

## DESCRIPTION OF EMBODIMENTS

Hereinafter, embodiments of the present invention will be described. Incidentally, the present invention is not limited only to the following embodiments.
In this specification, "X to Y" representing a range means "X or more and Y or less." Further, unless otherwise noted, operation and measurement of physical properties are performed under the conditions of room temperature (20 to 25°C)/relative humidity of 40 to 50%.
According to an aspect of the present invention, there is provided a fuel cell electrode catalyst layer including: a catalyst which includes a catalyst carrier and a catalyst metal carried on the catalyst carrier; and a polymer electrolyte, in which a BET specific surface area of the catalyst carrier is more than 850 ($m^2$/g carrier), the polymer electrolyte contains an cation-exchange group, and a maximum value ($I_{max}$) and a minimum value ($I_{min}$) of a local I/C ratio satisfy the following Mathematical Formula 1. Incidentally, in this specification, the "fuel cell electrode catalyst layer" is also referred to as the "electrode catalyst layer" or the "catalyst layer," the "catalyst carrier" is also referred to as the "carrier," and the "catalyst" is also referred to as the "electrode catalyst." The term "/g carrier" means "per 1 g of the carrier."
[Mathematical Formula 1]

$$I_{max}/I_{min} \geq 2.5 \qquad (Mathematical\ Formula\ 1)$$

According to the fuel cell electrode catalyst layer of the present invention, excellent power generation performance can be achieved particularly in a high-humidity (for example, 100% RH) environment. Although this is not intended to limit the technical scope of the present invention, this is presumed to be caused by the following mechanism.
The present inventors have found that in a fuel cell electrode catalyst layer including a catalyst and a polymer electrolyte (ionomer), even in a case where the catalyst is not in contact with the electrolyte, the catalyst can be effectively used by forming a three-phase boundary with water. Therefore, when a porous catalyst carrier having a large specific surface area is used in an electrode catalyst, the catalyst metal can be placed in a relatively large pore which the electrolyte cannot enter, and it is possible to prevent the electrolyte, which is more easily adsorbed to the surface of the catalyst metal as compared to a gas such as oxygen, from being in contact with the catalyst metal. Therefore, the reaction active area of the surface of the catalyst metal is prevented from being decreased. Furthermore, it is found that by forming the three-phase boundary with water, the catalyst can be effectively used. Incidentally, in this specification, a pore with a radius of less than 1 nm is also referred to as "micropore." Further, in this specification, a pore with a radius of 1 nm or more is also referred to as "mesopore."
Meanwhile, even in the case of using a catalyst carrier having a high specific surface area, there is a case where sufficient power generation performance is difficult to achieve particularly under a high-humidity environment. The present inventors have conducted intensive studies in view of such a problem, and as a result, have found that the above-described problem is solved by a fuel cell electrode catalyst layer in which the maximum value ($I_{max}$) and the minimum value ($I_{min}$) of the local I/C ratio measured by the method described below satisfy the above-described Mathematical Formula 1.
The fact that the fuel cell electrode catalyst layer satisfies the relation of the above-described Mathematical Formula 1 is reflected by the presence of a region in which the polymer electrolyte is unevenly distributed in the fuel cell electrode catalyst layer, and this is interpreted that the polymer electrolyte has an agglomerated form in that region. That is, since the polymer electrolyte included in the fuel cell electrode catalyst layer according to the present invention contains a hydrophilic cation-exchange group, the polymer electrolyte is likely to be agglomerated by the interaction of the hydrophilic group in the molecule or between molecules. In particular, in a case where the surface of the carrier of the catalyst layer is hydrophobic, since the polymer electrolyte is less likely to be adsorbed, it can be said that the polymer electrolyte is in a state of being more easily agglomerated. When the fuel cell electrode catalyst layer including such a polymer electrolyte that is likely to be agglomerated is subjected to the heat treatment, agglomeration is promoted by the crystallization of the polymer electrolyte so that the agglomeration portion of the polymer electrolyte is formed and the coverage ratio of the catalyst by the polymer electrolyte is reduced. Thus, it is considered that coverage becomes partial. In a case where the skeleton of the polymer electrolyte is a hydrophobic skeleton such as a polyfluorocarbon chain, such agglomeration is considered to be particularly remarkably exhibited by the hydrophobic effect. Herein, in a case where the relation between the maximum value ($I_{max}$) and the minimum value ($I_{min}$) of the local I/C ratio that is an index for uneven distribution of the polymer electrolyte in the catalyst layer satisfies Mathematical Formula 1, the agglomeration portion of the polymer electrolyte remarkably appears and this agglomeration portion is considered to function as a path of the proton. Further, in such a catalyst layer in which the polymer electrolyte is agglomerated, it is considered that the coverage ratio of the catalyst by the polymer electrolyte is low so that the accessibility of the reaction gas to the catalyst metal becomes favorable, and water repellency in a high-humidity environment is improved by exposure of the hydrophobic catalyst carrier. From the above reasons, the fuel cell electrode catalyst layer of the present invention is excellent in power generation property, and particularly, this effect is considered to be remarkably exhibited in a high-humidity environment. Incidentally, the mechanism is a presumption and is not intended to limit the present invention. Incidentally, the method of forming the agglomeration portion of the polymer electrolyte of the catalyst layer is not limited to the heat treatment as long as the maximum value ($I_{max}$) and the minimum value ($I_{min}$) of the local I/C ratio satisfy the above-described Mathematical Formula 1.

(Method of Measuring Local I/C Ratio)

A microtome section is cut from an arbitrary cross-section in the layer thickness direction of the catalyst layer (or the membrane catalyst layer assembly) as a measurement target, and then is used as a measurement sample. At this time, the cross-section in the layer thickness direction is taken so as to pass near the center of gravity of the catalyst layer (or the membrane catalyst layer assembly). STEM-EDX (energy dispersive X-ray spectrometry with a scanning transmission electron microscope) measurement is performed to the measurement sample under conditions described in Examples, and the distribution (at%) of the fluorine atom (ionomer) and the platinum atom (catalyst) in the layer thickness direction of the cross-section of the cathode catalyst layer is measured.

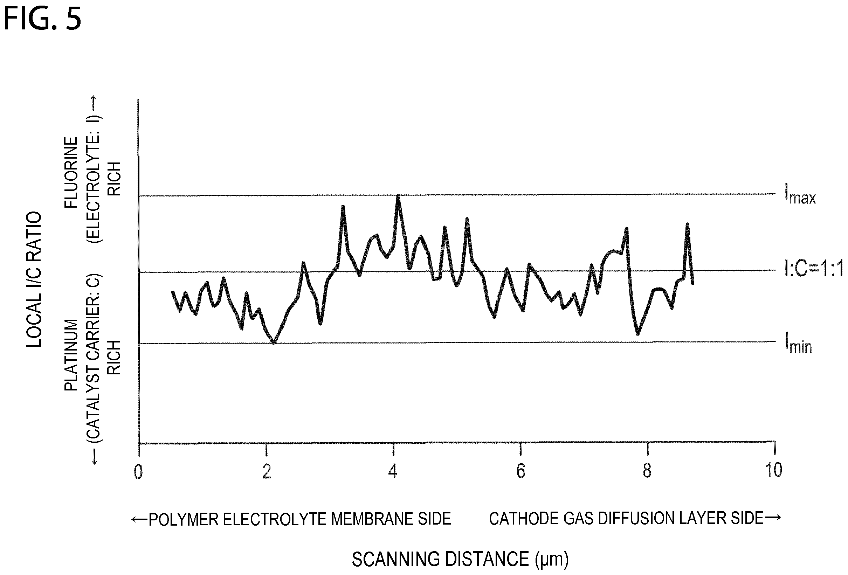

More specifically, first, the measurement sample is divided into cells of about 60 to 200 nm × 60 to 200 nm. Incidentally, the size of the cell may be appropriately selected such that the catalyst carrier is within one cell range. An arbitrary cell near the center column (cell (1)) is regarded as one unit, and then the abundance (at%) of the fluorine atom (ionomer) and the platinum atom (catalyst) in the whole element in the whole cell is measured. At this time, the abundance (at%) of the fluorine atom and the platinum atom in the cell (1) is measured by EDX in the depth direction from the measurement surface of the section. Next, the abundance (at%) of each of the fluorine atom (ionomer) and the platinum atom (catalyst) is calculated again by using, as a target, a cell (2) adjacent to the cell (1) in the vertical direction (the layer thickness direction). The same operation is repeated and the distribution (at%) of the fluorine atom and the platinum atom in each cell over the whole layer thickness direction is measured. Based on the obtained distribution (at%) of the fluorine atom and the platinum atom, the ionomer weight and the catalyst carrier weight in each cell are converted from the amount of the fluorine atom per unit weight of ionomer and the platinum carrying rate of the catalyst. The ratio of the ionomer weight and the catalyst carrier weight (local I/C ratio) is calculated from the converted ionomer weight and catalyst carrier weight. The local I/C ratio in the cathode catalyst layer is plotted using the local I/C ratio in each cell obtained above as a vertical axis and a position ($\mu$m) in the layer thickness direction of the center portion of the cell as a horizontal axis (see Fig. 5). The above-described expression "position in the layer thickness direction of the center portion of the cell" corresponds to the "scanning distance ($\mu$m) from the polymer electrolyte membrane side to the cathode gas diffusion layer side". In Fig. 5, in the cell in which the local I/C ratio is more than 1 (I (polymer electrolyte) : C (catalyst carrier) = 1 : 1), the existence proportion of the polymer electrolyte is larger than that of the catalyst carrier. In the plot obtained above, the maximum value ($I_{max}$) and the minimum value ($I_{min}$) of the local I/C ratio are obtained to calculate $I_{max}/I_{min}$.

As the method of converting the ionomer weight from the measured fluorine atom, for example, a method according to the following procedures (1) to (5) can be employed.

(1) The molar ratio of F/Pt is calculated from atom% of the fluorine atom (F) and the platinum atom (Pt) measured by EDX.
(2) The catalyst carrier weight per 1 mole of the platinum atom in the catalyst is calculated from the platinum carrying rate (% by weight).
(3) The mole number of fluorine atoms per 1 mole of the sulfur atom (in a case where the cation-exchange group of the polymer electrolyte is a sulfonic acid group) or per 1 mole of the phosphorus atom (in a case where the cation-exchange group of the polymer electrolyte is a phosphonate group) in the polymer electrolyte is calculated from the molecular formula of the ionomer.

(4) The ionomer dry weight per 1 mole of the fluorine atom is calculated from the relation between the equivalent weight (EW; the dry weight of the polymer electrolyte per 1 equivalent of the cation-exchange group) of the polymer electrolyte and the value calculated in (3).

(5) The ratio of the ionomer weight and the catalyst carrier weight (local I/C ratio) is calculated from the value calculated in (2) and the value calculated in (4).

Incidentally, the maximum value ($I_{max}$) of the local I/C ratio is the peak top value in which the local I/C ratio becomes the maximum value, among peaks having an upwardly protruding shape with a half-band width of 0.05 $\mu$m or more, that is detected in a case where the local I/C ratio of the layer thickness cross-section arbitrarily selected from the fuel cell catalyst layer is measured. Further, the minimum value ($I_{min}$) of the local I/C ratio is the peak top value in which the local I/C ratio becomes the minimum value, among peaks having a downwardly protruding shape with a half-band width of 0.05 $\mu$m or more, that is detected in a case where the local I/C ratio of the cross-section in a layer thickness direction arbitrarily selected from the fuel cell catalyst layer is measured.

Hereinafter, an embodiment of a catalyst layer of the present invention and a manufacturing method therefor, and an embodiment of a membrane electrode assembly (MEA), a fuel cell, and a vehicle using the catalyst layer will be described in detail with reference to drawings as appropriate. However, the present invention is not limited only to the following embodiments. Incidentally, the drawings may be expressed in an exaggerated manner for the convenience of description, and in the drawings, scaling factors of constituents may be different from actual values thereof. In addition, in the description of the embodiments of the present invention with reference to the drawings, the same components are denoted by the same reference numerals in the description of the drawings, and redundant description is omitted.

A fuel cell includes a membrane electrode assembly (MEA) and a pair of separators including an anode-side separator having a fuel gas passage through which a fuel gas flows and a cathode-side separator having an oxidant gas passage through which an oxidant gas flows. The fuel cell of this embodiment has excellent durability and can exhibit high power generation performance.

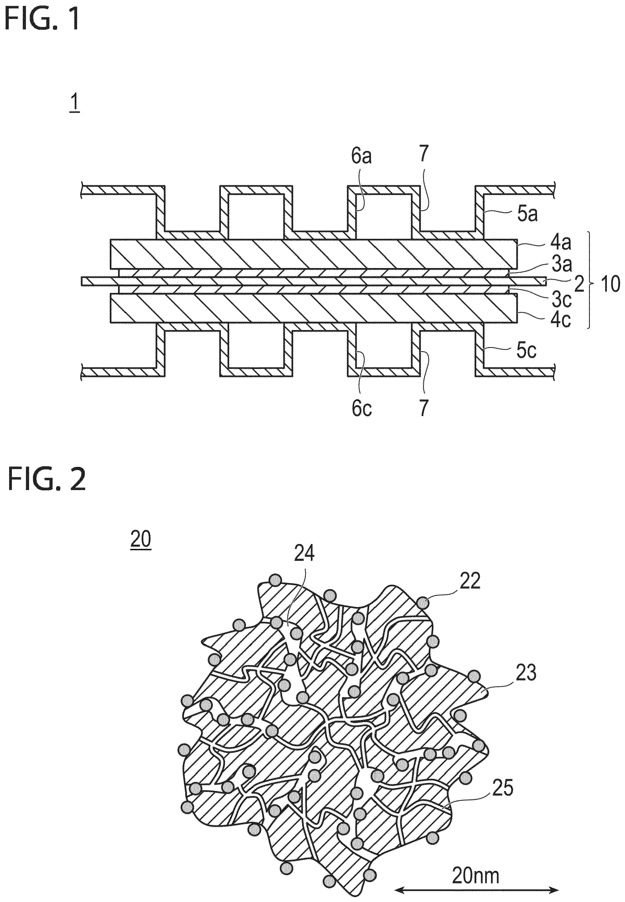

Fig. 1 is a schematic view illustrating a basic configuration of a polymer electrolyte fuel cell (PEFC) 1 according to an embodiment of the present invention. First, the PEFC 1 includes a solid polymer electrolyte membrane 2 and a pair of catalyst layers (an anode catalyst layer 3a and a cathode catalyst layer 3c) interposing the solid polymer electrolyte membrane 2. Further, a stacked body (CCM) of the solid polymer electrolyte membrane 2 and the catalyst layers (3a and 3c) is interposed by a pair of gas diffusion layers (GDLs) (an anode gas diffusion layer 4a and a cathode gas diffusion layer 4c). In this manner, the solid polymer electrolyte membrane 2, the pair of catalyst layers (3a and 3c), and the pair of gas diffusion layers (4a and 4c) in the stacked state constitute a membrane electrode assembly (MEA) 10.

In the PEFC 1, the MEA 10 is further interposed by a pair of separators (an anode separator 5a and a cathode separator 5c). In Fig. 1, the separators (5a and 5c) are illustrated to be positioned at both ends of the MEA 10 illustrated in the drawing. However, in a fuel cell stack in which a plurality of MEAs are stacked, generally, the separator is also used as a separator for an adjacent PEFC (not illustrated). In other words, MEAs in the fuel cell stack are sequentially stacked through the separator to constitute the stack. Incidentally, in an actual fuel cell stack, a gas sealing portion is disposed between the separators (5a and 5c) and the solid polymer electrolyte membrane 2 and between the PEFC 1 and another PEFC adjacent thereto, but the description thereof is omitted in Fig. 1.

The separators (5a and 5c) are obtained by applying a pressing treatment to a thin board having a thickness of, for example, 0.5 mm or less to form a corrugating shape as illustrated in Fig. 1. Convex portions of the separators (5a and 5c) seen from the MEA side are in contact with the MEA 10. This secures an electrical connection with the MEA 10. Further, concave portions (spaces between the separator and the MEA formed by the corrugating shapes of the separators) of the separators (5a and 5c) seen from the MEA side function as a gas passage for passing a gas during the operation of the PEFC 1. Specifically, a fuel gas (for example, hydrogen or the like) flows through a gas passage 6a of the anode separator 5a and an oxidant gas (for example, air or the like) flows through a gas passage 6c of the cathode separator 5c.

Meanwhile, concave portions of the separators (5a and 5c) seen from the side opposite to the MEA side function as a coolant passage 7 for passing a coolant (for example, water) for cooling the PEFC during the operation of the PEFC 1. Furthermore, manifolds (not illustrated) are typically installed in the separators. This manifold functions as a connecting means for connecting cells when the stack is configured. According to such a configuration, a mechanical strength of the fuel cell stack can be secured.

Incidentally, in the embodiment illustrated in Fig. 1, each of the separators (5a and 5c) is formed in a corrugating shape. However, the separator is not limited only to such a corrugating shape. An arbitrary shape such as a flat shape and a partially corrugating shape may be employed as long as the separator can serve as a gas passage and a coolant passage.

The fuel cell including the MEA of the present invention as described above exhibits excellent power generation performance. Herein, the type of the fuel cell is not particularly limited. In the above description, the polymer electrolyte fuel cell is exemplified. Among the fuel cells, an alkali fuel cell, a direct methanol fuel cell, a micro fuel cell, and the like are exemplified. Among them, from the viewpoint of a small size and capability of obtaining high density and high power, a polymer electrolyte fuel cell (PEFC) is preferably exemplified. In addition, the fuel cell is useful as a stationary power source besides a power source for a moving body such as a vehicle in which a mounting space is limited. Among the power sources, the fuel cell is particularly preferably used as a power source for a moving body such as a car where a high output voltage is required after the stopping of operation for a relatively long time.

A fuel used for operating the fuel cell is not particularly limited. For example, hydrogen, methanol, ethanol, 1-propanol, 2-propanol, 1-butanol, secondary butanol, tertiary butanol, dimethyl ether, diethyl ether, ethylene glycol, diethylene glycol, or the like can be used. Among them, from the viewpoint of capability of high output, hydrogen or methanol is preferably used.

Further, although application use of the fuel cell is not particularly limited, the fuel cell is preferably applied to vehicles . The electrolyte membrane-electrode assembly of the present invention has excellent power generation performance and durability and can be downsized. Therefore, from the viewpoint of mountability on a vehicle, the fuel cell of the present invention is particularly advantageous in a case where the fuel cell is applied to a vehicle.

Hereinafter, members constituting the fuel cell of this embodiment will be described in brief, but the technical scope of the present invention is not limited only to the following forms.

[Catalyst (Electrode Catalyst)]

The fuel cell electrode catalyst layer according to the present invention includes a catalyst which includes a catalyst carrier and a catalyst metal carried on the catalyst carrier, and a polymer electrolyte. The catalyst carrier is not particularly limited as long as a BET specific surface area thereof is more than 850 ($m^2$/g carrier), but the catalyst carrier preferably has pores (mesopores) having a radius of 1 nm or more as described later. More preferably, the catalyst carrier has pores (micropores) having a radius of less than 1 nm. When the catalyst carrier having a BET specific surface area of more than 850 ($m^2$/g carrier) is used, the catalyst metal is placed in a relatively large pore which the electrolyte cannot enter, and it is possible to prevent the electrolyte, which is more easily adsorbed to the surface of the catalyst metal as compared to a gas such as oxygen, from being in contact with the catalyst metal. Therefore, the reaction active area of the surface of the catalyst metal is prevented from being decreased. Furthermore, by forming the three-phase boundary with water, the catalyst can be effectively used.

A BET specific surface area of the catalyst (after carrying the catalyst metal) [BET specific surface area of the catalyst per 1 g of the carrier ($m^2$/g carrier)] is substantially the same as the BET specific surface area of the carrier. The BET specific surface area of the catalyst (after carrying the catalyst metal) is not particularly limited, but is preferably more than 850 $m^2$/g carrier, more preferably more than 1000 $m^2$/g carrier and 3000 $m^2$/g carrier or less, and particularly preferably 1100 to 1800 $m^2$/g carrier. When the specific surface area is within the above-described range, since sufficient mesopores and micropores can be secured, the catalyst is such that enough micropores to perform the gas transport (lower gas transport resistance) can be secured, and a large number of the catalyst metals can be placed (carried) in the mesopores. In addition, according to such a catalyst, an electrolyte and catalyst metals in the catalyst layer can be physically separated from each other (contact between catalyst metals and an electrolyte can be more effectively suppressed and prevented). Therefore, activity of the catalyst metals can be more effectively used. In addition, the micropores function as a gas transport path, and thus, a three-phase boundary with water is more remarkably formed, so that the catalytic activity can be more improved.

Incidentally, in this specification, the "BET specific surface areas ($m^2$/g carrier)" of the catalyst and the catalyst carrier are measured by a nitrogen adsorption method. Specifically, about 0.04 to 0.07 g of a sample is accurately weighed and sealed in a sample tube. This sample tube is preliminarily dried in a vacuum drier at 90°C for several hours to obtain a sample for measurement. For the weighing, an electronic balance (AW220) produced by Shimadzu Corporation is used. Incidentally, in the case of a coated sheet, about 0.03 to 0.04 g of a net weight of a coating layer obtained by subtracting a weight of Teflon (registered trademark) (substrate) having the same area from a total weight of the coated sheet is used as a sample weight. Next, under the following measurement conditions, the BET specific surface area is measured. In an adsorption side of adsorption and desorption isotherms, a BET plot is produced from a relative pressure (P/P0) range of about 0.00 to 0.45, and the BET specific surface area is calculated from the slope and the intercept thereof.

[Chemical Formula 1]

<Measurement Conditions>

Measurement Apparatus : BELSORP 36, High-Precise Automatic Gas Adsorption Apparatus manufactured by BEL Japan, Inc.

Adsorption Gas: $N_2$

Dead Volume Measurement Gas: He

Adsorption Temperature: 77 K (Liquid Nitrogen Temperature)

Measurement Preparation: Vacuum Dried at 90°C for several hours (After He Purging, Set on Measurement Stage)

Measurement Mode: Adsorption Process and Desorption Process in Isotherm

Measurement Relative Pressure $P/P_0$: about 0 to 0.99

Equilibrium Setting Time: 180 sec for 1 relative pressure

The particle size (primary particle size) of the catalyst (after carrying the catalyst metal) is substantially the same as the particle size of the carrier. The particle size (diameter) of the catalyst (after carrying the catalyst metal) is not particularly limited, but for example, a particle size ($D_{100}$) in which a cumulative abundance ratio from the smaller size side based on the number average by a laser diffraction particle size distribution method described below becomes 100% is 1000 nm or less. The lower limit of the particle size (primary particle size) of the catalyst is not particularly limited, but is, for example, 30 nm or more. Incidentally, "the particle size (primary particle size)" of the catalyst and the catalyst carrier is the value measured under the following conditions.

[Chemical Formula 2]

(Particle size distribution measurement conditions)

Method: Laser diffraction scattering method

Apparatus name: MT3000II (manufactured by MicrotracBEL Corp.)

Regarding the catalyst, an acidic group may be present on the surface of the catalyst particles or on the surface of pores. The acidic group is not particularly limited as long as it is a functional group which can release protons upon dissociation, but it preferably contains at least one selected from the group consisting of a hydroxyl group, a lactone group, and a carboxyl group. In a case where the carrier contains carbon, the acidic group preferably contains a hydroxyl group, a lactone group, or a carboxyl group. In a case where the carrier contains a metal oxide, the acidic group preferably contains a hydroxyl group. Such an acidic group is a hydrophilic group, a catalyst surface with hydrophilicity can be provided, and the moisture retention property of the electrode catalyst layer can be improved. Therefore, this may contribute to improvement in power generation performance in a low-humidity environment.

The amount of the acidic group of the catalyst per carrier is preferably 0.2 mmol/g carrier or more, more preferably 0.25 mmol/g carrier or more, and still more preferably 0.3 mmol/g carrier or more. When the acidic group is excessively provided, agglomeration of the polymer electrolyte can be prevented by hydrophilization of the catalyst surface. Therefore, the upper limit value of the amount of the acidic group is preferably 1.5 mmol/g carrier or less and more preferably 1.0 mmol/g carrier or less.

The amount of the acidic group can be measured by a titration method using an alkali compound. Specifically, the amount of the acidic group can be measured by the following method.

(Measurement of Amount of Acidic Group)

First, 2.5 g of catalyst powder having an acidic group is washed with 1 L of hot pure water followed by drying. After drying, it is weighed such that the carbon amount contained in the catalyst having an acidic group is 0.25 g, and after stirring with 55 ml of water for 10 minutes, ultrasonic dispersion is performed for 2 minutes. Next, this catalyst dispersion liquid is transferred to a glove box purged with nitrogen gas, and bubbled with nitrogen gas for 10 minutes. Then, to the catalyst dispersion liquid, 0.1 M aqueous base solution is added in an excess amount, and by performing neutralization titration of this basic solution with 0.1 M hydrochloric acid, the amount of the functional group is quantified based on the neutralization point. Herein, as the aqueous base solution, three kinds including NaOH, $Na_2CO_3$, and $NaHCO_3$ are used, and the neutralization titration operation is performed for each. This is because the type of the functional group to be neutralized is different for each base used. In the case of NaOH, the neutralization reaction occurs with a carboxyl group, a lactone group, and a hydroxyl group. In the case of $Na_2CO_3$, the neutralization reaction occurs with a carboxyl group and a lactone group. In the case of $NaHCO_3$, the neutralization reaction occurs with a carboxyl group. Further, based on the type and amount of the base for three kinds of a base added for titration and the resulting amount of the hydrochloric acid consumed, the amount of the acidic group is calculated. Incidentally, for confirmation of the neutralization point, a pH meter is used. In the case of NaOH, the neutralization point is pH 7.0. In the case of $Na_2CO_3$, the neutralization point is pH 8.5. In the case of $NaHCO_3$, the neutralization point is pH 4.5. According to this, the total amount of a carboxyl group, a lactone group, and a hydroxyl group that are added to the catalyst is obtained.

The catalyst of the fuel cell electrode catalyst layer preferably satisfies at least one of the following (a) to (c):

(a) the catalyst has pores with a radius of less than 1 nm and pores with a radius of 1 nm or more, a pore volume of the pores with a radius of less than 1 nm is 0.3 cc/g carrier or more, and the catalyst metal is carried inside the pores with a radius of 1 nm or more;
(b) the catalyst has pores with a radius of 1 nm or more and less than 5 nm, a pore volume of the pores is 0.8 cc/g carrier or more, and the catalyst metal has a specific surface area of 60 $m^2$/g carrier or less; and
(c) the catalyst has pores with a radius of less than 1 nm and pores with a radius of 1 nm or more, a mode radius of pore distribution of the pores with a radius of less than 1 nm is 0.3 nm or more and less than 1 nm, and the catalyst metal is carried inside the pores with a radius of 1 nm or more.

Incidentally, in this specification, the catalyst satisfying the above (a) is also referred to as the "catalyst (a)," the catalyst satisfying the above (b) is also referred to as the "catalyst (b)," and the catalyst satisfying the above (c) is also referred to as the "catalyst (c)."

Hereinafter, the catalysts (a) to (c) will be described in detail as preferred aspects.

(Catalysts (a) and (c))

The catalyst (a) includes a catalyst carrier and a catalyst metal carried on the catalyst carrier and satisfies the following configurations (a-1) to (a-3):

(a-1) the catalyst has pores with a radius of less than 1 nm (primary pores) and pores with a radius of 1 nm or more (primary pores) ;
(a-2) a pore volume of the pores with a radius of less than 1 nm is 0.3 cc/g carrier or more; and
(a-3) the catalyst metal is carried inside the pores with a radius of 1 nm or more.

Further, the catalyst (c) includes a catalyst carrier and a catalyst metal carried on the catalyst carrier and satisfies the following configurations (a-1), (c-1), and (a-3):

(a-1) the catalyst has pores with a radius of less than 1 nm and pores with a radius of 1 nm or more;
(c-1) a mode radius of pore distribution of the pores with a radius of less than 1 nm is 0.3 nm or more and less than 1 nm; and
(a-3) the catalyst metal is carried inside the pores with a radius of 1 nm or more.

As described above, the present inventors have found that, even when a catalyst metal is not in contact with an electrolyte, the catalyst metal can be effectively used by forming a three-phase boundary with water. Therefore, in the catalysts (a) and (c), by adopting a configuration that the above (a-3) the catalyst metal is carried inside the mesopores which the electrolyte cannot enter, the catalytic activity can be improved. On the other hand, in a case where the catalyst metal is carried inside the mesopores which the electrolyte cannot enter, since the transport distance of gas such as oxygen is increased and gas transportability is lowered, a sufficient catalytic activity cannot be elicited and catalytic performance is deteriorated under high load conditions. On the other hand, if the above (a-2) the pore volume of the micropores which the electrolyte and the catalyst metal may not or cannot enter at all is sufficiently secured or the above (c-1) the mode radius of the micropores is set large, the gas transport path can be sufficiently secured. Therefore, gas such as oxygen can be efficiently transported to the catalyst metal in the mesopores, that is, gas transport resistance can be reduced. According to this configuration, gas (for example, oxygen) passes through the micropores (gas transportability is improved), and gas can be efficiently brought into contact with the catalyst metal. Thus, in a case where the catalysts (a) and (c) are used in the catalyst layer, since the micropores are present in a large volume, a reaction gas can be transported to the surface of the catalyst metal present in the mesopores via the micropores (path), and thus gas transport resistance can be further reduced. Therefore, the catalyst layer including the catalysts (a) and (c) can exhibit higher catalytic activity, that is, the catalyst reaction can be further promoted. Therefore, the membrane electrode assembly and the fuel cell having the catalyst layer using the catalysts (a) and (c) can further increase power generation performance.

Fig. 2 is a schematic explanatory cross-sectional view illustrating shapes and structures of the catalysts (a) and (c). As illustrated in Fig. 2, catalysts (a) and (c) 20 include a catalyst metal 22 and a catalyst carrier 23. Further, the catalyst 20 has pores with a radius of less than 1 nm (micropores) 25 and pores with a radius of 1 nm or more (mesopores) 24. Herein, the catalyst metal 22 is carried inside the mesopores 24. Further, at least a portion of the catalyst metal 22 may be carried inside the mesopores 24 or a portion thereof may be carried on the surface of the catalyst carrier 23. However, from the viewpoint of preventing the contact between the electrolyte and the catalyst metal in the catalyst layer, substantially all the catalyst metals 22 are preferably carried inside the mesopores 24. Herein, the expression "substantially all the catalyst metals" is not particularly limited as long as an amount which can improve a sufficient catalytic activity can be achieved. The amount of "substantially all the catalyst metals" is preferably 50% by weight or more (upper limit: 100% by weight) and more preferably 80% by weight or more (upper limit: 100% by weight) with respect to all the catalyst metals.

In this specification, the expression "the catalyst metal is carried inside the mesopores" can be confirmed by using an observation means such as a scanning electron microscope (SEM) or a transmission electron microscope (TEM).

Further, the pore volume of pores with a radius of less than 1 nm (micropores) (of the catalyst after carrying the catalyst metal) is 0.3 cc/g carrier or more, and/or the mode radius (modal radius) of pore distribution of micropores (of the catalyst after carrying the catalyst metal) is 0.3 nm or more and less than 1 nm. Preferably, the pore volume of micropores is 0.3 cc/g carrier or more and the mode radius of pore distribution of micropores is 0.3 nm or more and less than 1 nm. When the pore volume and/or the mode radius of micropores is within the above range, micropores sufficient for gas transport can be secured, and gas transport resistance is small. Therefore, a sufficient amount of gas can be transported to the surface of the catalyst metal present in the mesopores via the micropores (path), and thus a high catalytic activity can be exhibited, that is, the catalyst reaction can be promoted. Further, an electrolyte (ionomer) and a liquid (for example, water) cannot enter the micropores, only gas is selectively passed (gas transport resistance can be reduced). The pore volume of micropores is more preferably 0.3 to 2 cc/g carrier and particularly preferably 0.4 to 1.5 cc/g carrier, in consideration of the effect of improving gas transportability. In addition, the mode radius of pore distribution of micropores is more preferably 0.4 to 1 nm and particularly preferably 0.4 to 0.8 nm. Incidentally, in this specification, the pore volume of pores with a radius of less than 1 nm is also simply referred to as "the pore volume of micropores." Similarly, in this specification, the mode radius of pore distribution of micropores is also simply referred to as "the mode radius of micropores."

The pore volume of pores with a radius of 1 nm or more and less than 5 nm (mesopores) in the catalyst (a) or (c) is not particularly limited, but is preferably 0.4 cc/g carrier or more, more preferably 0.4 to 3 cc/g carrier, and particularly preferably 0.4 to 1.5 cc/g carrier. When the pore volume is within the above range, more catalyst metal can be stored (carried) in the mesopores, and the electrolyte and the catalyst metal in the catalyst layer can be physically separated (contact between the catalyst metal and the electrolyte can be more effectively suppressed and prevented). Therefore, the activity of the catalyst metal can be more effectively used. Further, by the presence of many mesopores, the catalyst reaction can be more effectively promoted. In addition, the micropores act as a gas transport path, a three-phase boundary is more remarkably formed with water, and thus the catalytic activity can be further improved. Incidentally, in this specification, the pore volume of pores with a radius of 1 nm or more is also simply referred to as "the pore volume of mesopores."

The mode radius (modal radius) of pore distribution of pores with a radius of 1 nm or more (mesopores) in the catalyst (a) or (c) is not particularly limited, but is preferably 1 to 5 nm, more preferably 1 to 4 nm, and particularly preferably 1 to 3 nm. In the case of the mode radius of pore distribution of mesopores as described above, a more sufficient amount of the catalyst metal can be stored (carried) in the mesopores, and the electrolyte and the catalyst metal in the catalyst layer can be physically separated (contact between the catalyst metal and the electrolyte can be more effectively suppressed and prevented). Therefore, the activity of the catalyst metal can be more effectively used. Further, by the presence of large-volume mesopores, the catalyst reaction can be more effectively promoted. In addition, the micropores act as a gas transport path, a three-phase boundary is more remarkably formed with water, and thus the catalytic activity can be further improved. Incidentally, in this specification, the mode radius of pore distribution of mesopores is also simply referred to as "the mode radius of mesopores."

In this specification, the "radius of pores of micropores (nm) " means a radius of pores measured by a nitrogen adsorption method (MP method). Further, the "mode radius of pore distribution of micropores (nm)" means a pore radius at a point taking a peak value (maximum frequency) in the differential pore distribution curve that is obtained by the nitrogen adsorption method (MP method). Herein, the lower limit of the pore radius of the micropores is the lower limit that can be measured by the nitrogen adsorption method, that is, 0.42 nm or more. Similarly, the "radius of pores of mesopores (nm) " means a radius of pores measured by a nitrogen adsorption method (DH method). Further, the "mode radius of pore distribution of mesopores (nm)" means a pore radius at a point taking a peak value (maximum frequency) in the differential pore distribution curve that is obtained by the nitrogen adsorption method (DH method). Herein, the upper limit of the pore radius of the mesopores is not particularly limited, but is 5 nm or less.

In this specification, the "pore volume of micropores" means a total volume of micropores with a radius of less than 1 nm present in the catalyst and expressed as a volume per 1 g of the carrier (cc/g carrier). The "pore volume of micropores (cc/g carrier)" is calculated as a downside area (integrated value) under the differential pore distribution curve obtained by the nitrogen adsorption method (MP method). Similarly, the "pore volume of mesopores" means a total volume of mesopores with a radius of 1 nm or more and less than 5 nm present in the catalyst and expressed as a volume per 1 g of the carrier (cc/g carrier) . The "pore volume of mesopores (cc/g carrier)" calculated as a downside area (integrated value) under the differential pore distribution curve obtained by the nitrogen adsorption method (DH method).

In this specification, the "differential pore distribution" refers to a distribution curve obtained by plotting a pore size on the horizontal axis and a pore volume corresponding to the pore size in the catalyst on the vertical axis. That is, when the pore volume of the catalyst obtained by the nitrogen adsorption method (the MP method in the case of micropores; the DH method in the case of mesopores) is regarded as V and the pore diameter is regarded as D, a value $(dV/d(logD))$ obtained by dividing the differential pore volume dV by the logarithmic difference of the pore diameter $d(logD)$ is determined. Then, the differential pore distribution curve is obtained by plotting this $dV/d(logD)$ to the average pore diameter of each section. The differential pore volume dV indicates the increment of the pore volume between measuring points.

Herein, method for measuring the radius of micropores and pore volume by the nitrogen adsorption method (MP method) is not particularly limited, and for example, the method described in known documents such as "Science of Adsorption" (second edition, written jointly by Seiichi Kondo, Tatsuo Ishikawa and Ikuo Abe, MARUZEN Co., Ltd.), "Fuel Cell Characterization Methods" (edited by Yoshio Takasu, Masaru Yoshitake, Tatsumi Ishihara, Kagaku-Dojin Publishing Co., Inc.), and R. Sh. Mikhail, S. Brunauer, E. E. Bodor J. Colloid Interface Sci., 26, 45 (1968) can be employed. In this specification, the radius of micropores and pore volume by the nitrogen adsorption method (MP method) are a value measured by the method described in R. Sh. Mikhail, S. Brunauer, E. E. Bodor J. Colloid Interface Sci., 26, 45 (1968).

Further, the method for measuring the radius of mesopores and pore volume by the nitrogen adsorption method (DH method) is not also particularly limited, and for example, the method described in known documents such as "Science of Adsorption" (second edition, written jointly by Seiichi Kondo, Tatsuo Ishikawa and Ikuo Abe, MARUZEN Co., Ltd.), "Fuel Cell Characterization Methods" (edited by Yoshio Takasu, Masaru Yoshitake, Tatsumi Ishihara, Kagaku-Dojin Publishing Co., Inc.), and D. Dollion, G. R. Heal: J. Appl. Chem., 14, 109 (1964) can be employed. In this specification, the radius of mesopores and pore volume by the nitrogen adsorption method (DH method) are a value measured by the method described in D. Dollion, G. R. Heal: J. Appl. Chem., 14, 109 (1964).

The method for manufacturing the catalyst having specific pore distribution as described above is not particularly limited, but is usually important that the pore distribution (micropores and mesopores) of the carrier is set to the pore distribution as described above. Specifically, as the method for manufacturing a carrier having micropores and mesopores and a pore volume of micropores of 0.3 cc/g carrier or more, methods described in publications such as JP 2010-208887 A (US 2011/318,254 A, the same applies hereinafter) and WO 2009/75264 A (US 2011/058, 308 A, the same applies hereinafter) are preferably used. Further, as the method for manufacturing a carrier having micropores and mesopores and a mode radius of pore distribution of micropores of 0.3 nm or more and less than 1 nm, methods described in publications such as JP 2010-208887 A and WO 2009/75264 A are preferably used.


(Catalyst (b))

The catalyst (b) includes a catalyst carrier and a catalyst metal carried on the catalyst carrier and satisfies the following configurations (b-1) to (b-3):

    (b-1) the catalyst has pores with a radius of 1 nm or more and less than 5 nm;
    (b-2) a pore volume of the pores with a radius of 1 nm or more and less than 5 nm is 0.8 cc/g carrier or more; and
    (b-3) a specific surface area of the catalyst metal is 60 $m^2$/g carrier or less.


According to the catalyst having the configurations of the above (b-1) to (b-3), filling of the pores of the catalyst with water is suppressed, and then pores contributing to transport of a reaction gas is sufficiently secured particularly under a high-humidity environment. As a result, a catalyst excellent in gas transportability can be provided. Specifically, the volume of mesopores effective for gas transport is sufficiently secured, and further, the amount of the water maintained in the mesopores in which the catalyst metal is carried can be sufficiently reduced particularly under a high-humidity environment by reducing the specific surface area of the catalyst metal. Therefore, filling of the inside of the mesopores with water is suppressed, and thus gas such as oxygen can be more efficiently transported to the catalyst metal in the mesopores. That is, the gas transport resistance in the catalyst can be further reduced. As a result, in the catalyst (b) of this embodiment, the catalyst reaction is promoted and higher catalytic activity can be exhibited. Therefore, a membrane electrode assembly and a fuel cell having a catalyst layer using the catalyst (b) of this embodiment can further improve power generation performance particularly under a high-humidity environment.

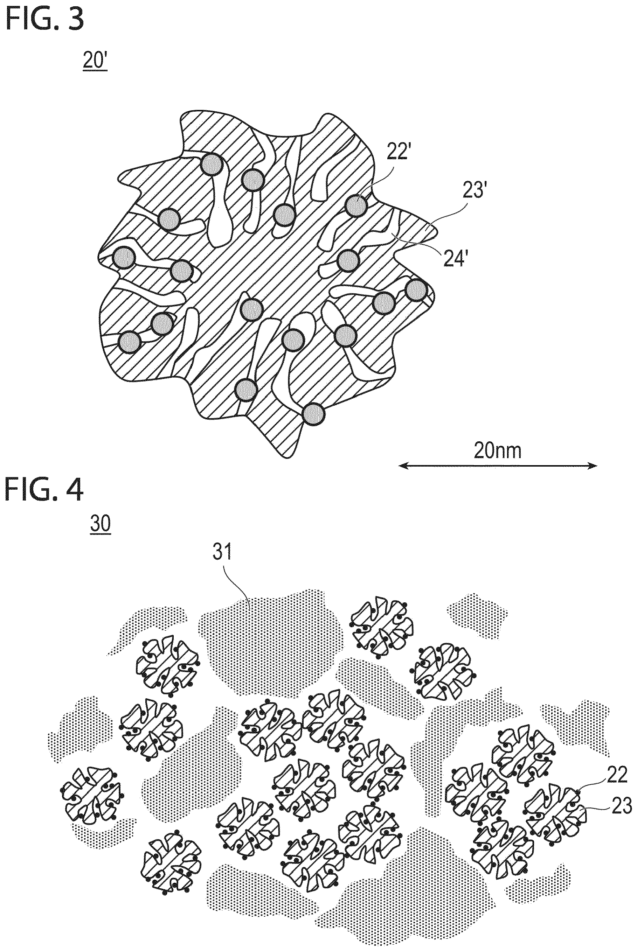

Fig. 3 is a schematic explanatory cross-sectional view illustrating a shape and a structure of a catalyst (b). As illustrated in Fig. 3, a catalyst 20' includes a catalyst metal 22' and a catalyst carrier 23'. Further, the catalyst 20' has pores (mesopores) 24' having a radius of 1 nm or more and less than 5 nm. Herein, the catalyst metal 22' is mainly carried inside the mesopores 24'. In addition, at least a portion of the catalyst metal 22' may be carried inside of the mesopores 24' or a portion thereof may be carried on the surface of the catalyst carrier 23'. However, from the viewpoint of preventing the contact between the electrolyte (electrolyte polymer, ionomer) and the catalyst metal in the catalyst layer and improving catalytic activity, substantially all the catalyst metals 22' are preferably carried inside the mesopores 24'. When the catalyst metal is in contact with the electrolyte, the area specific activity on the surface of the catalyst metal is reduced. On the other hand, with the above-described configuration, it is possible to make the electrolyte not enter the mesopores 24' of the catalyst carrier 23', and the catalyst metal 22' and the electrolyte are physically separated. Moreover, three-phase boundary can be formed with water, and consequently the catalytic activity is improved. Herein, the expression "substantially all the catalyst metals" is not particularly limited as long as an amount which can improve a sufficient catalytic activity can be achieved. The amount of "substantially all the catalyst metals" is preferably 50% by weight or more (upper limit: 100% by weight) and more preferably 80% by weight or more (upper limit: 100% by weight) with respect to all the catalyst metals.

The pore volume of pores with a radius of 1 nm or more and less than 5 nm (mesopores) in the catalyst (b) is 0.8 cc/g carrier or more. The pore volume of mesopores is preferably 0.8 to 3 cc/g carrier and more preferably 0.9 to 2 cc/g carrier. When the pore volume is within the range described above, pores contributing to transport of a reaction gas is much secured, and thus transport resistance of the reaction gas can be reduced. Therefore, since the reaction gas can be rapidly transported to the surface of the catalyst metal stored in the mesopores, the catalyst metal is effectively used. Further, when the volume of mesopores is within the range described above, the catalyst metal can be stored (carried) in the mesopores, and the electrolyte and the catalyst metal in the catalyst layer can be physically separated (contact between the catalyst metal and the electrolyte can be more effectively suppressed and prevented). As described above, in the embodiment in which the contact between the catalyst metal in the mesopores and the electrolyte is suppressed, the activity of the catalyst can be more effectively used, as compared with a case where the amount of the catalyst metal carried on the surface of the carrier is large.

Further, in the catalyst (b), the catalyst metal (catalyst component) has a specific surface area of 60 $m^2$/g carrier or less. The specific surface area of the catalyst metal is preferably 5 to 60 $m^2$/g carrier, more preferably 5 to 50 $m^2$/g carrier, still more preferably 15 to 50 $m^2$/g carrier, and particularly preferably 25 to 45 $m^2$/g carrier. The surface of the catalyst metal is hydrophilic, and water is likely to be maintained. When water is excessively maintained in the mesopores, the gas transport path becomes narrow, the diffusion rate of the reaction gas in water is low, and thus gas transportability is reduced. On the other hand, when the specific surface area of the catalyst metal is set to be relatively small as the above range, the amount of water adsorbed to the surface of the catalyst metal can be reduced particularly under a high-humidity environment. Therefore, the transport resistance of the reaction gas can be reduced particularly under a high-humidity environment, and the catalyst metal is effectively used. Incidentally, the expression "the specific surface area of the catalyst metal" in the present invention can be measured by the method described in, for example, Journal of Electroanalytical Chemistry 693 (2013) 34 to 41, or the like. In this specification, "the specific surface area of the catalyst metal" adopts the value measured by the following method.

Incidentally, the specific surface area of the catalyst metal can be decreased, for example, by decreasing the amount of the catalyst metal carried on the carrier surface.

(Method for Measuring Specific Surface Area of Catalyst Metal)

Regarding the cathode catalyst layer, electrochemical surface area (ECA) is obtained by cyclic voltammetry. Herein, hydrogen gas humidified so as to be saturated at a measurement temperature is flowed into the opposed anode, and this anode is used as a reference electrode and a counter electrode. Nitrogen gas similarly humidified is flowed into the cathode, and valves of entrance and exit of the cathode are closed immediately before starting measurement, and nitrogen gas is sealed. Measurement is performed in this state in the following conditions using an electrochemical measuring apparatus (manufactured by HOKUTO DENKO CORP., model: HZ-5000).

[Chemical Formula 3]

Electrolyte solution: 1M sulfuric acid (manufactured by Wako Pure Chemical Industries, Ltd., for measurement of harmful metal)

Scanning rate: 50 mV/s

Number of cycles: 3 cycles

Lower limit voltage value: 0.02 V

Upper limit voltage value: 0.9 V

The method for manufacturing the catalyst having specific pore volume as described above is not particularly limited, but it is important that the mesopore volume of the carrier is set to the pore distribution described above. Specifically, as the method for manufacturing a carrier having mesopores and a pore volume of mesopores of 0.8 cc/g carrier or more, methods described in publications such as JP 2010-208887 A (US 2011/318,254 A, the same applies hereafter) and WO 2009/75264 A (US 2011/058,308 A, the same applies hereafter) are preferably used.

The material of the carrier is not particularly limited as long as the BET specific surface area of the carrier is more than 850 $m^2$/g carrier, but a material having sufficient electron conductivity is preferred. Preferably, the main component is carbon. Specific examples thereof include carbon particles made of carbon black (Ketjen black (registered trademark), oil furnace black, channel black, lamp black, thermal black, acetylene black, or the like) and activated carbon. The expression "the main component is carbon" indicates that carbon atoms are contained as main component, and is a concept including both "consisting only of carbon atoms" and "consisting substantially of carbon atoms," and elements other than carbon atoms may be contained. The expression "consisting substantially of carbon atoms" indicates that the mixing of about 2 to 3% by weight or less of impurities is allowable.

More preferably, from the viewpoint of easily forming a desired pore region inside the carrier, carriers produced by method described in publications such as JP 2010-208887 A and WO 2009/75264 A.

In addition to the above-described carbon materials, porous metals such as tin (Sn) and titanium (Ti), conductive metal oxide, and the like may be used as a carrier. A plurality of these carriers may be used in combination.

A carrier containing carbon or a porous metal such as tin (Sn) or titanium (Ti) as a main component has a hydrophobic carrier surface. For this reason, with use of such a carrier, the agglomeration of a polymer electrolyte having a hydrophilic cation-exchange group can be further promoted.

The BET specific surface area of the carrier is not particularly limited as long as it is more than 850 ($m^2$/g carrier). In the catalyst carrier having a BET specific surface area of 850 ($m^2$/g carrier) or less, in some cases, the catalyst metal is placed in a relatively large pore and it is difficult to prevent the catalyst metal from being in contact with the electrolyte. The BET specific surface area of the carrier is preferably more than 1000 ($m^2$/g carrier) and 3000 ($m^2$/g carrier) or less and more preferably 1100 to 2000 ($m^2$/g carrier) . In the case of the specific surface area as described above, sufficient mesopores and micropores can be secured, and thus more catalyst metals can be stored (carried) inside the mesopores while the micropores sufficient for gas transport (lower gas transport resistance) can be secured. Further, the electrolyte and the catalyst metal in the catalyst layer are physically separated (contact between the catalyst metal and the electrolyte can be more effectively suppressed and prevented) . Therefore, the activity of the catalyst metal can be more effectively used. Moreover, by the presence of many micropores and mesopores, the action and effect of the present invention are significantly exerted and the catalyst reaction can be more effectively promoted. Further, the balance between dispersibility of the catalyst metal on the catalyst carrier and the effective utilization rate can be properly controlled. In addition, the micropores act as a gas transport path, the three-phase boundary is more remarkably formed with water, and thus catalytic activity can be further improved.

The particle size (primary particle size) of the catalyst carrier is substantially the same as the particle size (primary particle size) of the catalyst. The particle size (diameter) of the catalyst carrier is not particularly limited, but for example, a particle size ($D_{100}$) in which a cumulative abundance ratio from the smaller size side based on the number average by a laser diffraction particle size distribution method becomes 100% is 1000 nm or less. The lower limit of the particle size (primary particle size) of the catalyst carrier is not particularly limited, but is, for example, 30 nm or more.

The catalyst metal that can be used in the present invention has a function of a catalytic action of an electrochemical reaction. The catalyst metal used in the anode catalyst layer is not particularly limited as long as it has a catalytic action for oxidation reaction of hydrogen, and a known catalyst can be similarly used. Further, the catalyst metal used in the cathode catalyst layer is not also particularly limited as long as it has a catalytic action for a reduction reaction of oxygen, and a known catalyst can be similarly used. Specifically, the catalyst metal can be selected from metals such as platinum, ruthenium, iridium, rhodium, palladium, osmium, tungsten, lead, iron, copper, silver, chromium, cobalt, nickel, manganese, vanadium, molybdenum, gallium, and aluminum, and alloys thereof.

Of these, those which contain at least platinum are preferably used in order to improve catalytic activity, poisoning resistance against carbon monoxide or the like, heat resistance, and the like. That is, the catalyst metal is preferably platinum or contains platinum and a metal component other than platinum, and is more preferably platinum or a platinum-containing alloy. Such a catalyst metal can exhibit high activity. The alloy compositions may preferably contain 30 to 90 atom% of platinum, although it depends on the type of metal to be alloyed, and the content of the metal to be alloyed with platinum may be 10 to 70 atom%. Incidentally, in general, an alloy is a collective name of a combination of a metal element combined with one or more kinds of metal elements or non-metallic elements, such combination having metallic characteristics. The structure of an alloy may be an eutectic alloy which is a mixture of crystals of different component elements, a solid solution which is formed by completely molten component elements, a compound where the component elements form an intermetallic compound or a compound of a metal with a non-metal, or the like, and may be any of them in the present application. At this time, the catalyst metal used in the anode catalyst layer and the catalyst metal used in the cathode catalyst layer may be appropriately selected from the above. In this specification, unless otherwise noted, the descriptions for catalyst metals for the anode catalyst layer and the cathode catalyst layer have the same definitions for both. However, the catalyst metals for the anode catalyst layer and the cathode catalyst layer need not be the same, and may be appropriately selected so as to provide the desired action described above.

The shape and size of the catalyst metal (catalyst component) are not particularly limited, and any shape and size similar to those of known catalyst components may be adopted. For example, those having granular, scaly, or layered shape can be used, and granular shape is preferred. At this time, the average particle size (diameter) of the catalyst metal (catalyst metal particles) is not particularly limited, but is preferably more than 2.5 nm, more preferably 3 to 30 nm, and particularly preferably more than 3 nm and 10 nm or less. When the average particle size of the catalyst metal is 3 nm or more, the catalyst metal is relatively firmly carried inside the mesopores, and the contact with the electrolyte in the catalyst layer is more effectively suppressed and prevented. In addition, the micropores remain without being blocked by the catalyst metal, the gas transport path is more favorably secured, and gas transport resistance can be further reduced. Moreover, elution due to potential change is prevented, and temporal performance deterioration can be also suppressed. Therefore, catalytic activity can be further improved, that is, the catalyst reaction can be more efficiently promoted. On the other hand, when the average particle size of the catalyst metal particles is 30 nm or less, the catalyst metal can be carried inside the mesopores of the carrier by a simple method, and the electrolyte coverage ratio of the catalyst metal can be reduced. Incidentally, the "average particle size of the catalyst metal particles" in the present invention can be measured as the crystallite diameter obtained from the half-band width of the diffraction peak of the catalyst metal component in the X-ray diffraction or an average value of the particle size of the catalyst metal particles examined by using a transmission electron microscope (TEM) .

The amount of the catalyst metal carried in the carrier (also referred to as a carrying rate) may be set to preferably 10 to 80% by weight, more preferably 20 to 70% by weight, and still more preferably 30 to 50% by weight with respect to the total amount of the catalyst (that is, the carrier and the catalyst metal) . When the carried amount is in the above range, a sufficient dispersion degree of the catalyst metal on the carrier, improvement in power generation performance, economic advantages, and the catalytic activity per unit weight can be achieved, which is preferable.

In the fuel cell electrode catalyst layer, the content of the catalyst metal per unit catalyst coated area ($mg/cm^2$) ("the content of the catalyst metal per unit catalyst coated area" being also referred to as "basis weight") is not particularly limited as long as a sufficient dispersion degree of the catalyst on the carrier and power generation performance can be achieved. The basis weight is, for example, 0.01 to 1 $mg/cm^2$. However, in a case where the catalyst contains platinum or a platinum-containing alloy, the platinum content per unit catalyst coated area is preferably 0.5 $mg/cm^2$ or less . Use of an expensive noble metal catalyst represented by platinum (Pt) or a platinum alloy is a reason for yielding a fuel cell with high price. Therefore, it is preferable to cut the cost by lowering the amount of expensive platinum used (platinum content) to the above-described range. The lower limit value is not particularly limited as long as power generation performance can be achieved, and the lower limit value is, for example, 0.01 $mg/cm^2$ or more. The platinum content is more preferably 0.02 to 0.4 $mg/cm^2$. The fuel cell electrode catalyst layer according to the present invention has high activity per catalyst weight and it is possible to reduce the amount of an expensive catalyst used.

Incidentally, in this specification, inductively coupled plasma emission spectroscopy (ICP) is used for measuring (confirming) the "content of the catalyst metal (platinum) per unit catalyst coated area ($mg/cm^2$)." The method for adjusting a desired "content of the catalyst metal (platinum) per unit catalyst coated area ($mg/cm^2$)" can be easily performed by a person skilled in the art, and for example, the amount can be adjusted by controlling the composition (catalyst concentration) and coating amount of slurry.

[Catalyst Layer]

The fuel cell electrode catalyst layer (catalyst layer) of the present invention may be present in either a cathode catalyst layer or an anode catalyst layer, but is preferably used in the cathode catalyst layer. As described above, in the fuel cell electrode catalyst layer of the present invention, a catalyst can be effectively used by forming a three-phase boundary with water even when the catalyst and the electrolyte are not in contact with each other. This is because water is formed in the cathode catalyst layer.

Fig. 4 is a schematic explanatory cross-sectional view illustrating a shape and a structure of a fuel cell electrode catalyst layer according to an embodiment of the present invention. A catalyst layer 30 illustrated in Fig. 4 includes a catalyst, which includes a catalyst carrier 23 and a catalyst metal 22 carried on the catalyst carrier 23, and a polymer electrolyte 31. In the catalyst layer 30, an agglomeration portion 31 is formed in the polymer electrolyte.

In the fuel cell electrode catalyst layer according to the present invention, the maximum value ($I_{max}$) and the minimum value ($I_{min}$) of the local I/C ratio measured by the above-described method satisfy the relation of the above-described Mathematical Formula 1. According to this, excellent power generation performance can be achieved, and excellent power generation performance can be achieved particularly under a high-humidity environment. The local I/C ratio in the above-described Mathematical Formula 1 reflects the degree of the agglomeration of the polymer electrolyte. That is, when the agglomeration of the polymer electrolyte is promoted, the maximum value ($I_{max}$) and the maximum value ($I_{max}$) /minimum value ($I_{min}$) ratio become larger, and thus the minimum value ($I_{min}$) becomes smaller. The agglomeration of the polymer electrolyte is promoted, for example, by performing the heat treatment to the coating film of the catalyst ink containing the polymer electrolyte having a hydrophilic cation-exchange group and the catalyst at a temperature equal to or higher than the glass transition temperature of the polymer electrolyte. The agglomeration of the polymer electrolyte can be particularly remarkably promoted by using a polymer electrolyte having a hydrophobic main chain such as a polyfluorocarbon chain. When the polymer electrolyte is heated at a temperature equal to or higher than the glass transition temperature (Tg (°C)), it is considered that the crystallization of the polymer electrolyte advances to form the agglomeration portion. In particular, when the heat treatment is performed at a high temperature exceeding Tg + 20 (°C), even in a case where the glass transition temperature (Tg (°C)) varies depending on the molecular weight distribution of the polymer electrolyte or the like, the whole polymer electrolyte included in the fuel cell electrode catalyst layer can be crystallized. When the polymer electrolyte included in the fuel cell electrode catalyst layer is crystalline, the volume expansion of the polymer electrolyte under a high-humidity environment is suppressed and thus the gas transport passage is considered to be easily secured. Therefore, from the viewpoint of power generation performance in a high-humidity environment, the polymer electrolyte included in the fuel cell electrode catalyst layer according to the present invention is preferably crystalline. In an embodiment of the present invention, the polymer electrolyte included in the fuel cell electrode catalyst layer is a crystalline polymer electrolyte.

In the case of $I_{max}/I_{min} \geq 2.5$, as compared to the case of $I_{max}/I_{min} < 2.5$, power generation performance is enhanced, and this effect can be remarkably exhibited particularly in a high-humidity environment (for example, 100% RH). The details of the mechanism that the power generation performance is enhanced in the case of $I_{max}/I_{min} \geq 2.5$ are not clear, but the mechanism is presumed to have a relation with the coverage form of the catalyst by the polymer electrolyte, including the formation of the agglomeration portion of the polymer electrolyte. The upper limit of $I_{max}/I_{min}$ is not particularly limited, but from the viewpoint of oxygen transportability, the upper limit is, for example, 4.0 or less and preferably 3.5 or less.

The polymer electrolyte used in the fuel cell electrode catalyst layer of the present invention is not particularly limited as long as it contains an cation-exchange group. When the polymer electrolyte contains an cation-exchange group, the polymer electrolyte is hydrophilized to reduce the adhesiveness with the catalyst carrier so that agglomeration of the polymer electrolyte at the heat treatment is promoted. Examples of the cation-exchange group may include a sulfonic acid group and a phosphonate group. The polymer electrolyte is roughly classified into a fluorine-based polymer electrolyte and a hydrocarbon-based polymer electrolyte depending on the kind of ion exchange resin that is a constituent material.

Examples of the ion exchange resin constituting the fluorine-based polymer electrolyte include perfluorocarbon sulfonic acid-based polymers such as Nafion (registered trademark, manufactured by DuPont), Aciplex (registered trademark, manufactured by Asahi Kasei Corporation), and Flemion (registered trademark, manufactured by Asahi Glass Co., Ltd.), perfluorocarbon phosphonic acid-based polymers, trifluorostyrene sulfonic acid-based polymers, ethylene tetrafluoroethylene-g-styrene sulfonic acid-based polymers, and polyvinylidene fluoride-perfluorocarbon sulfonic acid-based polymers. From the viewpoint of having excellent heat resistance, chemical stability, durability, and mechanical strength, these fluorine-based polymer electrolytes are preferably used, and a fluorine-based polymer electrolyte formed from a perfluorocarbon sulfonic acid-based polymer is particularly preferably used.

Specific examples of the hydrocarbon-based electrolyte include sulfonated polyether sulfon (S-PES), sulfonated polyaryl ether ketone, sulfonated polybenzimidazole alkyl, phosphonated polybenzimidazole alkyl, sulfonated polystyrene, sulfonated polyether ether ketone (SPEEK), and sulfonated polyphenylene (S-PPP). From the viewpoint of manufacturing aspects that the cost of a raw material is low, the manufacturing process is simple, and selectivity of a material is high, these hydrocarbon-based polymer electrolytes are preferably used.

Of them, from the viewpoint of easily forming the agglomeration portion of the polymer electrolyte, the polymer electrolyte preferably has a sulfonic acid group as an cation-exchange group. Further, the polymer electrolyte also preferably has a polyfluorocarbon skeleton. When the polymer electrolyte has a hydrophobic main chain as a polyfluorocarbon skeleton, the agglomeration of the polymer electrolyte can be further promoted by hydrophobic effect at the time of drying the catalyst ink coating film and at the time of the heat treatment after drying.

Incidentally, only one kind of the aforementioned ion exchange resins may be used or two or more kinds thereof may be used in combination. Further, the material is not limited only to the aforementioned materials, and other materials may be used.

The conductivity of protons is important in the polymer electrolyte which is responsible for proton transfer. Herein, in a case where the EW of the polymer electrolyte is too large, ion conductivity of the whole catalyst layer deteriorates. Therefore, the catalyst layer of this embodiment preferably contains a polymer electrolyte with a small EW. Specifically, the catalyst layer of this embodiment contains preferably a polymer electrolyte with an EW of 1000 g/mol or less, more preferably a polymer electrolyte with an EW of 900 g/mol or less, and particularly preferably a polymer electrolyte with an EW of 800 g/mol or less.

On the other hand, in a case where the EW is too small, hydrophilicity is so high that smooth movement of water becomes difficult. From this point of view, the EW of the polymer electrolyte is preferably 400 g/mol or more and more preferably 500 g/mol or more. Incidentally, the equivalent weight (EW) represents the equivalent weight of an exchange group with proton conductivity. The equivalent weight is dry weight of a polymer electrolyte per 1 equivalent of the ion exchange group, and is represented by a unit of "g/mol."

In the fuel cell electrode catalyst layer of the present invention, two or more kinds of polymer electrolytes each having a different EW may be used. In this case, the EW of the whole polymer electrolyte is preferably within the above-described numerical value range.

In the case of using a plurality of polymer electrolytes each having a different EW, the EW of the polymer electrolyte used in the fuel cell electrode catalyst layer is calculated as follows. That is, the EW is calculated as a dry weight of the whole polymer electrolyte included in the fuel cell electrode catalyst layer per 1 equivalent of the cation-exchange group. For example, in a case where a polymer electrolyte (2) having an EW of 1000 is concurrently used in an amount of 2 parts by weight with respect to 1 part by weight of a polymer electrolyte (1) having an EW of 700, the EW of the polymer electrolyte is calculated as follows: $(700 \times 1/3) + (1000 \times 2/3) = 900$.

Further, the catalyst layer contains two or more kinds of polymer electrolytes each having a different EW in the power generation surface, and in this case, a polymer electrolyte having a lowest EW among polymer electrolytes may be used in a region in which a relative humidity of gas in a passage is 90% or less. By adopting such material arrangement, the resistance value becomes small, irrespective of the current density region, and cell performance can be improved.

Furthermore, it is desirable to use the polymer electrolyte having a lowest EW in a region with a temperature higher than the average temperature of the inlet and outlet of cooling water. Accordingly, the resistance value becomes small, irrespective of the current density region, and cell performance can be further improved.

Further, it is desirable to use the polymer electrolyte having a lowest EW in a region within the range of 3/5 from at least one of gas supply ports of fuel gas and oxidant gas, with respect to the passage length, from the viewpoint of reducing the resistance value of fuel cell system.

In a preferred embodiment of the present invention, the polymer electrolyte contains a sulfonic acid group as an cation-exchange group, and the fuel cell electrode catalyst layer contains 1.2 (mmol/g carrier) or more of a sulfonic acid group derived from the polymer electrolyte. When the fuel cell electrode catalyst layer contains 1.2 (mmol/g carrier) or more of a sulfonic acid group, particularly excellent power generation performance can be exhibited particularly in a low-humidity environment (for example, 40% RH). This is not intended to limit the technical scope of the present invention, but this is presumed to be achieved by the following mechanism. That is, it is presumed that under a low-humidity environment (for example, 40% RH), water necessary for proton transport is not sufficient in the three-phase boundary reaction so that the catalyst metal carried inside the mesopores is not sufficiently and effectively used to decrease the effective surface area of the catalyst metal. However, when the cell electrode catalyst layer has a sulfonic acid group with a high density with respect to the catalyst as described above, it is considered that the concentration of protons derived from the sulfonic acid group per catalyst can be increased even under a low-humidity environment. Further, by the presence of the sulfonic acid group with a high density, it is considered that hydrophilicity of the cell electrode catalyst layer is increased and the moisture content in the catalyst layer can be improved. From the above reasons, it is presumed that by using the cell electrode catalyst layer in which the content of the sulfonic acid group is a predetermined value or more, water sufficient to allow the reaction by the catalyst metal in the mesopores to advance is ensured even under a low-humidity environment, the three-phase boundary reaction efficiently advances, and high power generation performance is achieved. As a preferred specific example of the method of forming the agglomeration portion of the polymer electrolyte, a method in which the coating film of the catalyst ink containing the catalyst and the polymer electrolyte is heated at a temperature equal to or higher than the glass transition temperature of the polymer electrolyte is exemplified. In a case where the formation of the agglomeration portion of the polymer electrolyte is promoted by such a method, the polymer electrolyte included in the fuel cell electrode catalyst layer becomes crystalline (a crystalline polymer electrolyte). Since the crystalline polymer electrolyte has a low moisture content, there is a tendency that high power generation performance is less likely to be achieved particularly under a low-humidity environment (for example, 40% RH). However, the present inventors have found that even in the case of using such a crystalline polymer electrolyte, when the fuel cell electrode catalyst layer contains 1.2 (mmol/g carrier) or more of a sulfonic acid group, high power generation performance can be achieved even under a low-humidity environment.

The amount of the sulfonic acid group contained in the fuel cell electrode catalyst layer is more preferably 1.3 (mmol/g carrier) or more, still more preferably 1.5 (mmol/g carrier) or more, and particularly preferably 1.7 (mmol/g carrier) or more. The upper limit of the content of the sulfonic acid group is not particularly limited, but from the viewpoint of the balance relation with power generation performance in a high-humidity environment, the upper limit is, for example, 5 (mmol/g carrier) or less and preferably 3 (mmol/g carrier) or less.

The amount of the sulfonic acid group contained in the fuel cell electrode catalyst layer is calculated by the following Mathematical Formula 2. Incidentally, "IC" in the following Mathematical Formula 2 is different from the local I/C ratio in Mathematical Formula 1 and is a ratio of the total weight of the polymer electrolyte and the total weight of the catalyst carrier included in the catalyst layer.

[Mathematical Formula 2]

$$\text{Mathematical Formula 2: Amount of sulfonic acid group (mmol/g carrier)} = 1/EW * IC * 10^3$$

IC: polymer electrolyte/catalyst carrier (weight ratio)
EW: equivalent weight of ion exchange group of polymer electrolyte (g/mol)

As presented in the above-described Mathematical Formula 2, the amount of the sulfonic acid group of the fuel cell electrode catalyst layer can be controlled by arbitrarily setting the weight ratio of the polymer electrolyte/the catalyst carrier (IC) and the EW of the polymer electrolyte. For example, in order to increase the amount of the sulfonic acid group of the fuel cell electrode catalyst layer, the ratio of the polymer electrolyte in the weight ratio of the polymer electrolyte/the catalyst carrier (IC) may be increased or a polymer electrolyte having a low EW may be used for preparing a fuel cell electrode catalyst layer. By increasing the ratio of the polymer electrolyte in the weight ratio of the polymer electrolyte/the catalyst carrier (IC) or using a polymer electrolyte having a low EW, excellent power generation performance can be achieved in a low-humidity environment while the catalyst metal basis weight is decreased to suppress the amount of an expensive noble metal used.

Incidentally, the amount of the sulfonic acid group of the fuel cell electrode catalyst layer can also be analyzed by elementary analysis. As the elementary analysis method, for example, inductively coupled plasma atomic emission spectroscopy (ICP-AES) and the like are exemplified. As for the amount of the sulfonic acid group of the fuel cell electrode catalyst layer, in a case where there is an error between the value calculated by the above-described Mathematical Formula 2 and the analysis value, the value calculated by Mathematical Formula 2 is adopted as the amount of the sulfonic acid group in the present invention.

The catalyst layer of this embodiment may include a liquid proton conducting material capable of connecting the catalyst and the polymer electrolyte in a proton conductible state between the catalyst and the polymer electrolyte. By introducing the liquid proton conducting material, a proton transport path through the liquid proton conducting material is provided between the catalyst and the polymer electrolyte, so that protons necessary for the power generation can be efficiently transported on the surface of the catalyst. According to this, availability of the catalyst is improved, and thus an amount of the catalyst used can be reduced while maintaining power generation performance. This liquid proton conducting material may be interposed between the catalyst and the polymer electrolyte. The liquid proton conducting material may be disposed in pores (secondary pores) between porous carriers in a catalyst layer or may be disposed in pores (micropores or mesopores: primary pores) in porous carriers.

The liquid proton conducting material is not particularly limited as long as it has ion conductivity and has a function of forming a proton transport path between the catalyst and the polymer electrolyte. Specifically, water, a protic ionic liquid, an aqueous perchloric acid solution, an aqueous nitric acid solution, an aqueous formic acid solution, an aqueous acetic acid solution, and the like can be exemplified.

In the case of using water as the liquid proton conducting material, the water can be introduced as the liquid proton conducting material into the catalyst layer by wetting the catalyst layer with a small amount of liquid water or a humidified gas before the start of power generation. In addition, water generated through electrochemical reaction during the operation of a fuel cell can also be used as the liquid proton conducting material. Therefore, in a state where a fuel cell starts to be operated, the liquid proton conducting material is not necessarily retained. For example, a surface distance between the catalyst and the electrolyte is desirably set to be a diameter of an oxygen ion constituting a water molecule, that is, 0.28 nm or more. By maintaining such a distance, water (liquid proton conducting material) can be interposed between the catalyst and the polymer electrolyte (in the liquid conducting material retaining portion) while maintaining the non-contact state between the catalyst and the polymer electrolyte, so that a proton transport path can be secured by water therebetween.

In the case of using a material such as an ionic liquid other than water as the liquid proton conducting material, the ionic liquid, the polymer electrolyte, and the catalyst are desirably allowed to be dispersed in a solution in the preparation of a catalyst ink. However, the ionic liquid may be added at the time of applying a catalyst to a catalyst layer substrate.

(Method for Manufacturing Catalyst Layer)

The fuel cell electrode catalyst layer of the present invention is preferably formed by heat-treating the coating film of the catalyst ink, which includes a catalyst having a BET specific surface area of the catalyst carrier of more than 850 (m²/g carrier) and a polymer electrolyte, at a temperature equal to or higher than a glass transition temperature of the polymer electrolyte. That is, according to an aspect of the present invention, there is provided a method for manufacturing a fuel cell electrode catalyst layer including a catalyst which includes a catalyst carrier and a catalyst metal carried on the catalyst carrier and a polymer electrolyte, including: forming a coating film of a catalyst ink containing the catalyst and the polymer electrolyte; and heat-treating the coating film at a temperature equal to or higher than a glass transition temperature of the polymer electrolyte, in which a BET specific surface area of the catalyst carrier is more than 850 (m²/g carrier), and the polymer electrolyte contains an cation-exchange group. However, the method for manufacturing a fuel cell electrode catalyst layer according to the present invention is not limited to the above-described method. Hereinafter, a preferred embodiment for manufacturing a catalyst layer will be described, but the technical scope of the present invention is not limited only to the following embodiment. Further, various conditions of each constituent of the catalyst layer, such as a material, are as described above, and thus the description thereof is herein omitted in some cases.

First, the catalyst carrier having a BET specific surface area of more than 850 (m²/g carrier) (in this specification, also referred to as the "porous carrier") is prepared.

Next, the catalyst metal is carried on the porous carrier to obtain a catalyst powder. The carrying of the catalyst metal on the porous carrier can be performed by a known method. For example, a known method such as an impregnation method, a liquid phase reduction carrying method, an evaporation drying method, a colloid adsorption method, a spray pyrolysis method, or a reverse micelle (micro-emulsion method) can be used. Incidentally, in order to adjust the average particle size of the catalyst metal to a desired range, an annealing treatment may be performed under a reducing atmosphere after the catalyst metal is carried on the carrier. At this time, the temperature of the annealing treatment is preferably in a range of 300 to 1200°C, more preferably in a range of 500 to 1150°C, and particularly preferably in a range of 700 to 1000°C. Further, the reducing atmosphere is not particularly limited as long as it contributes to the particle growth of the catalyst metal, but, the annealing treatment is preferably performed under a mixed atmosphere of a reducing gas and an inert gas. The reducing gas is not particularly limited, but is preferably a hydrogen ($H_2$) gas. In addition, the inert gas is not particularly limited, but helium (He), neon (Ne), argon (Ar), krypton (Kr), xenon (Xe), nitrogen ($N_2$), and the like can be used. The inert gas may be used singly or may be used as a mixed gas of two or more kinds thereof. Further, the time for the heat treatment is preferably 0.1 to 2 hours and more preferably 0.5 to 1.5 hours.

The catalyst powder may be treated with an oxidative solution in order to provide an acidic group. An embodiment of the present invention includes a step of treating a catalyst, which includes a catalyst carrier and a catalyst metal carried on the catalyst carrier, with an oxidative solution to provide the catalyst with an acidic group.

Preferred examples of the oxidative solution which is used include aqueous solutions of sulfuric acid, nitric acid, phosphite acid, potassium permanganate, hydrogen peroxide, hydrochloric acid, chloric acid, hypochlorous acid, chromic acid, and the like. Incidentally, this treatment with an oxidative solution is performed by contacting, one or more times, the catalyst with an oxidative solution. In a case where the treatment with an oxidative solution is performed two or more times, the type of the solution can be varied for each treatment. As for the condition for the treatment with an oxidative solution, an aqueous solution containing 0.1 to 10.0 mol/L of the oxidizing agent is preferable, and the catalyst is preferably immersed in the solution. The time for immersion is preferably 1 to 10 hours, and the treatment temperature is preferably 50 to 90°C. The volume ratio of a water vapor adsorption amount relative to a nitrogen adsorption amount or the amount of an acidic group in the carrier can be controlled by adjusting the BET specific surface area of a catalyst, the type and the concentration of an oxidative solution, the treatment time, and the treatment temperature.

As the polymer electrolyte, the above-described material is used, but from the viewpoint of promoting agglomeration and the viewpoint of increasing the amount of the cation-exchange group (particularly, the amount of the sulfonic acid group) to improve power generation performance in a low-humidity environment, the EW of the polymer electrolyte is preferably 1000 g/mol or less. The EW of the polymer electrolyte is more preferably 900 g/mol or less and particularly preferably 800 g/mol or less. In the case of using two or more kinds of polymer electrolytes each having a different EW, the above-described EW of the whole polymer electrolyte is within the numerical value range. That is, the EW is a value calculated as the dry weight of the whole polymer electrolyte included in the fuel cell electrode catalyst layer per 1 equivalent of the cation-exchange group.

From the viewpoint of forming the agglomeration portion of the polymer electrolyte, the catalyst ink preferably contains the polymer electrolyte at a weight ratio of 0.9 or more with respect to the catalyst carrier in the catalyst powder. The weight ratio of the polymer electrolyte to the catalyst carrier is more preferably 1.0 or more and still more preferably 1.1 or more. The upper limit of the weight ratio of the polymer electrolyte to the catalyst carrier is not particularly limited, but is, for example, 2.0 or less.

In an embodiment of the manufacturing method according to the present invention, the catalyst ink contains the polymer electrolyte at a weight ratio of 0.9 or more with respect to the catalyst carrier, and the EW of the polymer electrolyte is 1000 g/mol or less.

A catalyst ink containing the catalyst powder obtained above, a polymer electrolyte, and a solvent is prepared. The solvent is not particularly limited, and the normal solvent used in forming a catalyst layer can be similarly used. Specific examples thereof include water such as tap water, pure water, ion-exchange water, or distilled water; cyclohexanol; lower alcohols with 1 to 4 carbon atoms such as methanol, ethanol, n-propanol, isopropanol, n-butanol, sec-butanol, isobutanol, and tert-butanol; propylene glycol; benzene; toluene; and xylene. Other than these, acetic acid butyl alcohol, dimethyl ether, ethylene glycol, and the like may be used as a solvent. These solvents may be used singly in one kind or may be used as a mixed liquid of two or more kinds thereof. Preferably, from the viewpoint of dispersibility of the polymer electrolyte, as a solvent, an aqueous solution containing the lower alcohol with 1 to 4 carbon atoms at a concentration of 5 to 45% by weight is used. Incidentally, in the catalyst ink, the catalyst powder and the polymer electrolyte may be dissolved in a solvent or a portion which is not dissolved may exist.

The amount of the solvent constituting the catalyst ink is not particularly limited as long as it is an amount such as to allow the electrolyte to be completely dissolved. Specifically, the concentration of the component other than the solvent, such as the catalyst powder and the polymer electrolyte, is preferably 1 to 50% by weight and more preferably about 5 to 30% by weight in the electrode catalyst ink.

Incidentally, in the case of using additives such as a water-repellent agent, a dispersing agent, a thickener, and a pore-forming material, these additives may be added to the catalyst ink. At this time, the amount of the additives added is not particularly limited as long as it is an amount such as not to disturb the above effect of the present invention. For example, the amount of the additives added is preferably 5 to 20% by weight with respect to the whole weight of the electrode catalyst ink.

In order to control the particle size distribution of the catalyst, the disintegration treatment of the catalyst ink (catalyst) may be performed. The method for the disintegration treatment is not particularly limited, and specifically, a sand grinder, a ball mill, a bead mill, a sand mill, a jet mill, a homogenizer, an ultrasonic dispersion apparatus, an attritor, and the like are exemplified. Further, the stirring condition is also not particularly limited, but for example, in the case of using a sand grinder, a ball mill, a bead mill, or a sand mill, it is preferable that particles having an average particle size (diameter) of about 0.5 to 3 mm are added to a dispersion liquid at a ratio of 40 to 80% by volume. Moreover, such a mixture is preferably treated at a temperature of 10 to 40°C, preferably 20 to 30°C, and a speed of 500 to 2500 rpm for 3 to 20 minutes. The average secondary particle size of the catalyst (catalyst powder) measured by the following method after the disintegration treatment is, for example, 1 to 10 $\mu$m.

[Chemical Formula 4]

(Particle size distribution measurement conditions)

Method: Laser diffraction scattering method

Apparatus name: MT3000II (manufactured by MicrotracBEL Corp.)

A method of applying the catalyst ink to the substrate is not particularly limited and known methods can be used. Specifically, the application can be performed using a known method such as a spray (spray coating) method, a Gulliver printing method, a die coater method, a screen printing method, or a doctor blade method.

At this time, a solid polymer electrolyte membrane (an electrolyte layer) or a gas diffusion substrate (a gas diffusion layer) can be used as the substrate to which the catalyst ink is applied. In such a case, after forming the catalyst layer on the surface of a solid polymer electrolyte membrane (an electrolyte layer) or a gas diffusion substrate (a gas diffusion layer), an obtained stacked body can be directly used for manufacturing a membrane electrode assembly. Alternatively, the catalyst layer may be obtained by forming the catalyst layer on the substrate which is a peelable substrate such as a polytetrafluoroethylene (PTFE) [Teflon (registered trademark)] sheet and then peeling the catalyst layer portion off the substrate.

The application of the catalyst ink is performed such that the thickness of the catalyst layer after drying is preferably 0.05 to 30 $\mu$m, more preferably 1 to 15 $\mu$m, and still more preferably 3 $\mu$m or more and less than 10 $\mu$m. Incidentally, the above thickness is applied to both the cathode catalyst layer and the anode catalyst layer. However, the thicknesses of the cathode catalyst layer and the anode catalyst layer may be the same or different from each other.

As for the above-described coating film, the coating layer (membrane) of the catalyst ink is dried under an air atmosphere or an inert gas atmosphere at a temperature equal to or higher than room temperature (25°C) and lower than the glass transition temperature (Tg (°C)) of the polymer electrolyte, for example, 50 to 90°C for 1 to 60 minutes.

Next, the dried catalyst layer is subjected to the heat treatment. Accordingly, the crystallization of the polymer electrolyte advances to promote agglomeration. For example, a fluorine-based polymer electrolyte such as Nafion (registered trademark) has the feature that the structure is rigid and hydrophobic. In such a polymer electrolyte, the higher-order structure is fixed at the glass transition temperature (Tg (°C)) or lower, but when the polymer electrolyte is heated to the glass transition temperature (Tg (°C)) or higher, flexibility is improved. For this reason, it is considered that the agglomeration by the hydrophobic effect is promoted. In particular, as compared to the method of forming a relatively uniform coating membrane of a polymer electrolyte on a catalyst, such as spray drying, by performing the heat treatment to the coating film of the catalyst ink containing the catalyst and the polymer electrolyte, the formation of the agglomeration portion can be promoted.

The heat treatment temperature (Tm (°C)) of the catalyst layer may be equal to or higher than the glass transition temperature (Tg (°C)) of the polymer electrolyte, but from the viewpoint of power generation performance, the heat treatment temperature is, for example, Tg (°C) $\leq$ Tm (°C) $\leq$ Tg + 100 (°C) and preferably Tg + 20 (°C) < Tm (°C) $\leq$ Tg + 70 (°C) (for example, Tg (°C) $\leq$ Tm (°C) $\leq$ 200°C). Further, from the viewpoint of preventing the decomposition of the polymer electrolyte, the heat treatment temperature (Tm (°C)) of the catalyst layer is also preferably Tg (°C) $\leq$ Tm (°C) < Td (°C) and more preferably Tg + 20 (°C) < Tm (°C) < Td (°C). When the heat treatment temperature (Tm (°C)) of the catalyst layer is set to Tg + 20 (°C) < Tm (°C), the whole polymer electrolyte included in the catalyst layer is crystallized, and the agglomeration portion can be remarkably formed. Incidentally, the glass transition temperature (Tg (°C)) and the thermal decomposition temperature (Td (°C)) of the polymer electrolyte in this specification are values measured by a differential scanning calorimeter.

Further, the time for the heat treatment is, for example, 5 to 500 minutes and preferably 10 to 300 minutes. The atmosphere of the heat treatment may be in air or under an inert gas atmosphere such as nitrogen. The heat treatment of the catalyst layer may be performed, for example, by a conventionally known method such as an oven, a furnace, or a thermostat dryer. Incidentally, in the case of using a plurality of polymer electrolytes each having different Tg, the Tg is the highest Tg. That is, the heat treatment of the fuel cell electrode catalyst layer is preferably performed at the glass transition temperature or higher of the polymer electrolyte having the highest glass transition temperature among the plurality of polymer electrolytes. Further, in the case of using a plurality of polymer electrolytes each having different Td, the Td is preferably the lowest Td. That is, the heat treatment of the fuel cell electrode catalyst layer is preferably performed at lower than the decomposition temperature of the polymer electrolyte having the lowest decomposition temperature among the plurality of polymer electrolytes.

[Membrane Electrode Assembly, Fuel Cell, and Vehicle]

According to further another embodiment of the present invention, a fuel cell membrane electrode assembly containing the above-described fuel cell electrode catalyst layer is provided. That is, a fuel cell membrane electrode assembly having a solid polymer electrolyte membrane 2, a cathode catalyst layer disposed on one side of the electrolyte membrane, an anode catalyst layer disposed on the other side of the electrolyte membrane, and a pair of gas diffusion layers (4a and 4c) which interposes the electrolyte membrane 2, the anode catalyst layer 3a, and the cathode catalyst layer 3c. Further, in this membrane electrode assembly, at least one of the cathode catalyst layer and the anode catalyst layer is the catalyst layer of the embodiment described above.

However, in consideration of the necessity for the improvement in proton conductivity and the improvement in the transport property (the gas diffusion property) of a reactant gas (particularly, $O_2$), at least the cathode catalyst layer is preferably the catalyst layer of the embodiment described above. However, the catalyst layer according to the above-described embodiment is not particularly limited, and for example, the catalyst layer may be used as the anode catalyst layer or as both the cathode catalyst layer and the anode catalyst layer.

According to further another embodiment of the present invention, a fuel cell including the membrane electrode assembly of the above-described embodiment is provided. That is, an embodiment of the present invention is a fuel cell including the membrane electrode assembly of the above-described embodiment. The fuel cell includes a pair of an anode separator and a cathode separator which interposes the membrane electrode assembly of the above-described embodiment.

Hereinafter, the constituents of the PEFC 1 using the catalyst layer of the above-described embodiment will be described with reference to Fig. 1. However, characteristics of the present invention lie in the catalyst layer. Therefore, the specific constitutions of members other than the catalyst layer constituting the fuel cell may be properly modified with reference to the conventionally known knowledge.

(Electrolyte Membrane)

The electrolyte membrane includes, for example, a solid polymer electrolyte membrane 2 such as can be seen in the constitution illustrated in Fig. 1. This solid polymer electrolyte membrane 2 has the function of allowing the protons generated in an anode catalyst layer 3a to be selectively transmitted to a cathode catalyst layer 3c along the membrane thickness direction during the operation of a PEFC 1. Further, the solid polymer electrolyte membrane 2 serves as a partition wall to prevent the fuel gas supplied to the anode side from mixing with the oxidant gas supplied to the cathode side.

An electrolyte material constituting the solid polymer electrolyte membrane 2 is not particularly limited, and can be properly referred to the conventionally known knowledge. For example, the fluorine-based polymer electrolyte and the hydrocarbon-based polymer electrolyte, which are described as the polymer electrolyte in the above, can be used. At this time, it is not necessary to use the same as the polymer electrolyte used for the catalyst layer.

(Gas Diffusion Layer)

The gas diffusion layers (the anode gas diffusion layer 4a and the cathode gas diffusion layer 4c) have the function of promoting the diffusion of the gas (the fuel gas or the oxidant gas) supplied through the gas passages (6a and 6c) of the separator to the catalyst layers (3a and 3c) and the function as the electronic conduction path.

A material constituting a substrate of the gas diffusion layers (4a and 4c) is not particularly limited, and can be properly referred to the conventionally known knowledge. Examples thereof include sheet-like materials with conductivity and porosity, such as fabrics made of carbon, paper-like paper-making materials, felt, and unwoven fabrics. The thickness of the substrate may be properly determined in consideration of the characteristics of the obtained gas diffusion layer, and may be about 30 to 500 $\mu$m. When the thickness of the substrate is a value within such a range, the balance between the mechanical strength and the diffusivity of gas, water and the like can be properly controlled.

The gas diffusion layer preferably contains a water-repellent agent in order to further enhance water repellency so as to prevent a flooding phenomenon and the like. The water-repellent agent is not particularly limited, and examples thereof include fluorine-based polymer materials such as polytetrafluoroethylene (PTFE), polyvinylidenefluoride (PVdF), polyhexafluoropropylene, and a tetrafluoroethylene-hexafluoropropylene copolymer (FEP); polypropylene; and polyethylene.

Furthermore, in order to further improve water repellency, the gas diffusion layer may be those which have a carbon particle layer formed from an aggregate of carbon particles containing a water-repellent agent (a microporous layer; MPL, not illustrated in the drawing) on the catalyst layer side of the substrate.

The carbon particles contained in the carbon particle layer are not particularly limited, and conventionally known materials such as carbon black, graphite and expanded graphite may be properly adopted. Among these, carbon black such as oil furnace black, channel black, lamp black, thermal black, and acetylene black may be preferably used since it has excellent electron conductivity and a large specific surface area. The average particle size of the carbon particles may be set to about 10 to 100 nm. Accordingly, high drainage by capillary force is obtained, and the contact with the catalyst layer can also be improved.

Examples of the water-repellent agent used for the carbon particle layer include the same as the above-mentioned water-repellent agent. Above all, the fluorine-based polymer materials may be preferably used since they are excellent in water repellency and corrosion resistance during the electrode reaction.

The mixing ratio between the carbon particles and the water-repellent agent in the carbon particle layer may be set to about 90 : 10 to 40 : 60 at weight ratio (carbon particles : water-repellent agent) in consideration of the balance between the water repellency and the electron conductivity. Incidentally, also the thickness of the carbon particle layer is not particularly limited and may be properly determined in consideration of the water repellency of the obtained gas diffusion layer.

(Method for Manufacturing Membrane Electrode Assembly)

The method for manufacturing the membrane electrode assembly is not particularly limited, and a conventionally known method can be used. For example, it is possible to use a method of transferring by means of a hot press or applying the catalyst layer to the solid polymer electrolyte membrane, drying the resultant product, and joining the gas diffusion layer to the product or a method of preparing two gas diffusion electrodes (GDEs) by previously applying the catalyst layer to the microporous layer side of the gas diffusion layer (or one side of the substrate layer when the microporous layer is not included and drying the resultant product, and joining these gas diffusion electrodes to both sides of the solid polymer electrolyte membrane by means of a hot press. The application and assembly conditions of the hot press and the like may be properly adjusted, depending on the kinds (perfluorosulfonic acid-based and hydrocarbon-based) of the solid polymer electrolyte membrane and the polymer electrolyte in the catalyst layer.

(Separator)

The separator has the function of electrically connecting each cell in series when configuring the fuel cell stack by connecting in series a plurality of single cells of the fuel cell such as a polymer electrolyte fuel cell. Further, the separator also has the function of serving as a partition wall for separating a fuel gas, an oxidant gas and a refrigerant from each other. In order to secure the passages therefor, as described above, a gas passage and a refrigerating passage are preferably provided on each of the separators. As the material constituting the separators, conventionally known materials, for example, carbon such as dense carbon graphite and carbon plate, or metals such as stainless steel can be properly adopted without any limitation. The thickness and size of the separators, and the shape and size of each passage to be provided are not particularly limited, and may be properly determined in consideration of the desired output performance of the obtained fuel cell.

The method for manufacturing a fuel cell is not particularly limited, and the conventionally known knowledge in the field of fuel cells can be properly referred to.

Moreover, in order for the fuel cell to be able to generate a desired voltage, a fuel cell stack, which has a structure in which a plurality of layers of membrane electrode assemblies are connected in series through the separators, may be formed. The shape or the like of the fuel cell is not particularly limited, and may be properly determined so as to obtain battery characteristics such as the desired voltage.

The above-mentioned PEFC and membrane electrode assembly use the catalyst layer excellent in power generation performance and durability. Accordingly, the PEFC and the membrane electrode assembly are excellent in power generation performance and durability.

The PEFC of this embodiment and the fuel cell stack using the same can be, for example, mounted on a vehicle as a drive power source. According to an embodiment of the present invention, it is possible to provide a vehicle including the above-described fuel cell.

EXAMPLES

The effects of the present invention will be described by using the following examples and comparative examples. However, the technical scope of the present invention is not intended to be limited only to the following examples.

(Example 1)

A carbon material 1 was prepared according to the method described in WO 2009/75264 A. The obtained carbon material 1 was heated at 1800°C for 5 minutes under an argon gas atmosphere to prepare a carrier A.

The BET specific surface area of the carrier A obtained as above was 1200 $m^2$/g carrier. Further, the primary particle size (diameter) of the carrier A was 200 nm or less.

The carrier A was used and platinum (Pt) with an average particle size (diameter) of 3.2 nm was carried as a catalyst metal on this carrier A such that the carrying rate became 50% by weight, thereby obtaining a catalyst powder A-1. That is, 46 g of the carrier A was immersed in 1000 g of a dinitrodiammine platinum nitric acid solution with a platinum concentration of 4.6% by mass (platinum content: 46 g) and the mixture was stirred, then 100 ml of 100% ethanol was added as a reducing agent. This solution was stirred and mixed at a boiling point for 7 hours so that platinum was carried on the carrier A. Then, the mixture was filtered and dried to obtain a catalyst powder with a carrying rate of 50% by weight. Thereafter, the catalyst powder was subjected to an annealing treatment by being maintained in a hydrogen atmosphere at a temperature of 900°C for 1 hour to obtain a catalyst powder A-1.

As for the catalyst powder A-1 obtained as above, the pore volumes of micropores and mesopores, the mode radii of micropores and mesopores, the BET specific surface area, the platinum specific surface area, and the amount of the acidic group were measured. As a result, the pore volume of micropores was 0.71 cc/g carrier; the pore volume of mesopores was 0.91 cc/g carrier; the mode radius of micropores was 0.75 nm; the mode radius of mesopores was 1.64 nm; the BET specific surface area was 1190 $m^2$/g carrier; the platinum specific surface area was 40.7 $m^2$/g carrier; and the amount of the acidic group was a detection limit or less. It was confirmed with an electron microscope that the catalyst metal is carried inside the mesopores in the catalyst powder A-1.

The catalyst powder A-1 was subjected to a treatment with an oxidative solution for adding an acidic group. The catalyst powder A-1 was immersed at 80°C for 6 hours in 3.0 mol/L of aqueous nitric acid solution and then was filtered and dried to obtain a catalyst powder A-2 having an acidic group.

As for the catalyst powder A-2 obtained as above, the pore volumes of micropores and mesopores, the mode radii of micropores and mesopores, the BET specific surface area, the platinum specific surface area, and the amount of the acidic group were measured. As a result, the pore volume of micropores was 0.80 cc/g carrier; the pore volume of mesopores was 1.10 cc/g carrier; the mode radius of micropores was 0.75 nm; the mode radius of mesopores was 1.64 nm; the BET specific surface area was 1260 $m^2$/g carrier; the platinum specific surface area was 40.3 $m^2$/g carrier; and the amount of the acidic group was 0.32 mmol/g carrier. Further, the primary particle size of the catalyst powder A-2 was 200 nm or less and the average secondary particle size thereof was 2.6 $\mu$m.

The fluorine-based polymer electrolyte having a polyfluorocarbon skeleton (EW = 700 g/mol, Tg = 130°C, Td = 300°C) and the catalyst powder A-2 were mixed such that the weight ratio of the polymer electrolyte to the catalyst carrier became 1.2. Further, 40% by weight of an aqueous n-propyl alcohol solution was added as a solvent such that the solid content ratio (Pt + carbon carrier + ionomer) became 15% by weight, thereby preparing a cathode catalyst ink.

The cathode catalyst ink was applied in a size of 5 cm × 2 cm to a transfer substrate (PTFE) by screen printing to form a coating film. Thereafter, the coating film of the cathode catalyst ink was dried at 80°C for 15 minutes. The dried coating film of the cathode catalyst ink was accommodated in a thermostat dryer set at 180°C and then subjected to the heat treatment at 180°C for 30 minutes to obtain an electrode catalyst layer (cathode catalyst layer) including a crystallized polymer electrolyte (catalyst layer thickness: 8 $\mu$m).

Ketjen black (registered trademark) (particle size: 30 to 60 nm) was used as a carrier and platinum (Pt) having an average particle size of 2.5 nm was carried as a catalyst metal on the Ketjen black such that the carrying rate became 50% by weight, thereby obtaining a catalyst powder. This catalyst powder and an ionomer dispersion liquid (Nafion (registered trademark) D2020, EW = 1100 g/mol, manufactured by DuPont) as a polymer electrolyte were mixed such that the weight ratio of the carbon carrier and the ionomer became 1.3. Further, an aqueous n-propyl alcohol solution (50% by weight) was added as a solvent such that the solid content ratio (Pt + carbon carrier + ionomer) became 5% by weight, thereby preparing an anode catalyst ink.

Next, a gasket (manufactured by Teijin DuPont, Teonex (registered trademark), thickness: 25 $\mu$m (adhesive layer: 10 $\mu$m)) was disposed around the both sides of a polymer electrolyte membrane (manufactured by DuPont, NAFION (registered trademark) NR211, thickness: 25 $\mu$m). The anode catalyst ink was applied to one side of the electrolyte membrane by a spray coating method. The anode catalyst ink was dried by keeping the stage of spray coating at 60°C for 1 minute to form an anode catalyst layer. The cathode catalyst layer was thermally transferred to the exposed part of one side of the polymer electrolyte membrane by hot press (transfer condition: 150°C, 0.8 MPa, 10 minutes). The both sides of the obtained membrane catalyst layer assembly (1) (CCM (1)) were interposed between the gas diffusion layers (24BC, manufactured by SGL Carbon AG) to obtain a membrane electrode assembly (1) (MEA (1)). The platinum basis weight of the cathode catalyst layer is 0.20 mg/cm$^2$, and the cathode catalyst layer contains 1.7 (mmol/g carrier) of a sulfonic acid group.

(Example 2)

The cathode catalyst ink containing the catalyst powder A-2 was subjected to a disintegration treatment to obtain a catalyst powder A-2'. That is, the cathode catalyst ink was subjected to the disintegration treatment with a sand grinder (AIMEX Co., Ltd., BSG-04) using zirconia particles (average particle size (diameter) : 1.5 mm) at a disc rotation number of 1500 rpm for 10 minutes to obtain the catalyst powder A-2'. Incidentally, the primary particle size of the catalyst powder A-2' was 200 nm or less and the average secondary particle size thereof was 2.1 $\mu$m. A membrane catalyst layer assembly (2) (CCM (2)) and a membrane electrode assembly (2) (MEA (2)) were obtained in the similar manner to Example 1, except that the catalyst powder A-2' was used instead of the catalyst powder A-2. The platinum basis weight of the cathode catalyst layer is 0.20 mg/cm$^2$, and the cathode catalyst layer contains 1.7 (mmol/g carrier) of a sulfonic acid group.

(Example 3)

The catalyst powder A-1 was used in the preparation of the cathode catalyst ink instead of the catalyst powder A-2 in Example 1 and mixing was performed such that the weight ratio of the polymer electrolyte to the catalyst carrier became 1.3. Further, 10% by weight of an aqueous n-propyl alcohol solution was added as a solvent such that the solid content ratio (Pt + carbon carrier + ionomer) became 11% by weight, thereby preparing a cathode catalyst ink. A membrane catalyst layer assembly (3) (CCM (3)) and a membrane electrode assembly (3) (MEA (3)) were obtained in the similar manner to Example 1 except the above-described matters. The platinum basis weight of the cathode catalyst layer is 0.20 mg/cm$^2$, and the cathode catalyst layer contains 1.9 (mmol/g carrier) of a sulfonic acid group.

(Comparative Example 1)

A membrane catalyst layer assembly (4) (CCM (4)) and a membrane electrode assembly (4) (MEA (4)) were obtained in the similar manner to Example 1, except that the coating film of the cathode catalyst ink was not subjected to the heat treatment. The platinum basis weight of the cathode catalyst layer is 0.20 mg/cm$^2$, and the cathode catalyst layer contains 1.7 (mmol/g carrier) of a sulfonic acid group.

(Comparative Example 2)

A membrane catalyst layer assembly (5) (CCM (5)) and a membrane electrode assembly (5) (MEA (5)) were obtained in the similar manner to Example 2, except that the coating film of the cathode catalyst ink was not subjected to the heat treatment. The platinum basis weight of the cathode catalyst layer is 0.20 mg/cm$^2$, and the cathode catalyst layer contains 1.7 (mmol/g carrier) of a sulfonic acid group.

(Comparative Example 3)

A membrane catalyst layer assembly (6) (CCM (6)) and a membrane electrode assembly (6) (MEA (6)) were obtained in the similar manner to Example 3, except that the coating film of the cathode catalyst ink was not subjected to the heat treatment. The platinum basis weight of the cathode catalyst layer is 0.20 mg/cm$^2$, and the cathode catalyst layer contains 1.9 (mmol/g carrier) of a sulfonic acid group.

(Comparative Example 4)

Ketjen black (registered trademark) EC300J (manufactured by Ketjen Black International Company) (carrier B) having a BET specific surface area of 720 m$^2$/g carrier was prepared. The primary particle size (diameter) of the carrier B was 100 nm or less.
The carrier B was used and platinum (Pt) having an average particle size (diameter) of 2.5 nm was carried as a catalyst metal on the carrier B such that the carrying rate became 50% by weight, thereby obtaining a catalyst powder B. That is, 46 g of the carrier B was immersed in 1000 g of a dinitrodiammine platinum nitric acid solution with a platinum concentration of 4.6% by mass (platinum content: 46 g) and the mixture was stirred, then 100 ml of 100% ethanol was added as a reducing agent. This solution was stirred and mixed at a boiling point for 7 hours so that platinum was carried on the carrier B. Then, the mixture was filtered and dried to obtain a catalyst powder B having a carrying rate of 50% by weight.
As for the catalyst powder B obtained as above, the pore volumes of micropores and mesopores, the mode radii of micropores and mesopores, the BET specific surface area, the platinum specific surface area, and the amount of the acidic group were measured. As a result, the pore volume of micropores was 0.23 cc/g carrier; the pore volume of mesopores was 0.30 cc/g carrier; the BET specific surface area was 720 m$^2$/g carrier; the platinum specific surface area was 33.8 (m$^2$/g carrier); and the amount of the acidic group was 0.42 mmol/g carrier. In the catalyst powder B, the mode radius of mesopores or micropores was not clearly detected.
A fluorine-based polymer electrolyte (Nafion (registered trademark) D2020, EW = 1100 g/mol, manufactured by DuPont) and the catalyst powder B were mixed such that the weight ratio of the polymer electrolyte to the catalyst carrier became 0.9. Further, 40% by weight of an aqueous n-propyl alcohol solution was added as a solvent such that the solid content ratio (Pt + carbon carrier + ionomer) became 15% by weight, thereby preparing a cathode catalyst ink. Furthermore, a membrane catalyst layer assembly (7) (CCM (7)) and a membrane electrode assembly (7) (MEA (7)) were obtained in the similar manner to Comparative Example 1, except that the thickness of the catalyst layer was adjusted to 11 μm. The platinum basis weight of the cathode catalyst layer is 0.35 mg/cm$^2$, and the cathode catalyst layer contains 0.8 (mmol/g carrier) of a sulfonic acid group.

<Measurement of Local I/C Ratio>

The local I/C ratio (weight ratio) of the cathode catalyst layer of each of CCMs (1) to (7) was measured by the following method, and the maximum value ($I_{max}$) and the minimum value ($I_{min}$) of the local I/C ratio were obtained.
First, microtome sections were cut from the membrane catalyst layer assemblies (1) to (7) and used as measurement samples.
STEM-EDX (energy dispersive X-ray spectrometry with a scanning transmission electron microscope) measurement was performed to the above-described samples under conditions described below, and the distribution (at%) of the fluorine atom (ionomer) and the platinum atom (catalyst) in the layer thickness direction of cross-section of the cathode catalyst layer was measured.

(Conditions of STEM-EDX)

Apparatus Name

STEM: JEM-2800 manufactured by JEOL Ltd.
EDX: Noran system 7 manufactured by Thermo Fisher Scientific
Measurement interval (per one cell): 60 to 200 nm $\times$ 60 to 200 nm

Based on the distribution (at%) of the fluorine atom and the platinum atom obtained above, the ionomer weight and the catalyst carrier weight were converted from the amount of the fluorine atom per unit weight of ionomer and the platinum carrying rate of the catalyst. The maximum value ($I_{max}$) and the minimum value ($I_{min}$) of a ratio of the ionomer weight and the catalyst carrier weight (local I/C ratio) obtained above was obtained to calculate $I_{max}/I_{min}$. Incidentally, about 80 measurement regions (cells) from the edge of the polymer electrolyte membrane side to the edge of the cathode gas diffusion layer side of each measurement sample were measured. The results thereof are presented in the following Table 1.

<Evaluation of Power Generation Performance>

The cell voltage of MEAs (1) to (7) at the time of performing power generation at a current density of 1.0 A/cm$^2$ was measured under the following evaluation conditions to perform the evaluation. The results thereof are presented in the following Table 1.

<Evaluation conditions>

• Temperature: 80°C

• Gas component: hydrogen (anode side)/air (cathode side)

• Relative humidity: 40% RH/40% RH, or 100% RH/100% RH

• Pressure: 200 kPa (abs)/200 kPa (abs)

• Voltage scanning direction: cathode

[Table 1]

| (Table 1) | BET specific surface area (m$^2$/g carrier) | $I_{max}$ | $I_{min}$ | $I_{max}$ / $I_{min}$ | Sulfonic acid group (mmol/g carrier) | Cell voltage (V) @40% RH | Cell voltage (V) @100% RH |
|---|---|---|---|---|---|---|---|
| Example 1 | 1200 | 1.6 | 0.6 | 2.7 | 1.7 | 0.65 | 0.72 |
| Example 2 | 1200 | 1.7 | 0.6 | 2.8 | 1.7 | 0.64 | 0.70 |
| Example 3 | 1200 | 1.9 | 0.6 | 3.2 | 1.9 | 0.61 | 0.71 |
| Comparative Example 1 | 1200 | 1.2 | 0.5 | 2.4 | 1.7 | 0.63 | 0.55 |
| Comparative Example 2 | 1200 | 1.4 | 0.6 | 2.3 | 1.7 | 0.65 | 0.55 |
| Comparative Example 3 | 1200 | 1.2 | 0.6 | 2.0 | 1.9 | 0.62 | 0.52 |
| Comparative Example 4 | 720 | 0.6 | 0.3 | 2.0 | 0.8 | 0.58 | 0.63 |

As presented in the above table, it is found that in a case where the BET specific surface area of the catalyst carrier is more than 850 (m$^2$/g carrier) and $I_{max}/I_{min}$ is 2.5 or more, high power generation performance is exhibited particularly under a high-humidity environment. Further, it is found that in a case where the sulfonic acid group per catalyst carrier in the fuel cell electrode catalyst layer is 1.2 (mmol/g carrier) or more, power generation performance can be improved in a low-humidity environment.

Reference Signs List

| | |
|---|---|
| 1 | Polymer electrolyte fuel cell (PEFC) |
| 2 | Solid polymer electrolyte membrane |
| 3 | Catalyst layer |
| 3a | Anode catalyst layer |
| 3c | Cathode catalyst layer |
| 4a | Anode gas diffusion layer |
| 4c | Cathode gas diffusion layer |
| 5 | Separator |
| 5a | Anode separator |
| 5c | Cathode separator |
| 6a | Anode gas passage |
| 6c | Cathode gas passage |
| 7 | Coolant passage |
| 10 | Membrane electrode assembly (MEA) |
| 20, 20' | Catalyst |
| 22, 22' | Catalyst metal |
| 23, 23' | Carrier (catalyst carrier) |
| 24, 24' | Mesopore |
| 25 | Micropore |
| 30 | Catalyst layer |
| 31 | Polymer electrolyte (agglomeration portion) |

**Claims**

1. A fuel cell electrode catalyst layer (3) comprising:

   - a catalyst (20, 20') which includes a catalyst carrier (23, 23') and a catalyst metal (22, 22') carried on the catalyst carrier (23, 23'); and
   - a polymer electrolyte (31),

   wherein:

   - a BET specific surface area of the catalyst carrier (23, 23') is more than 850 ($m^2$/g carrier), the BET specific surface area being measured according to the description,
   - the polymer electrolyte (31) contains a sulfonic acid group as a cation-exchange group and the sulfonic acid group is contained in an amount of 1.2 (mmol/g carrier) or more, and
   - a maximum value (Imax) and a minimum value (Imin) of a local I/C ratio satisfy the following mathematical formula (1):

$$\text{Imax/Imin} \geq 2.5. \qquad\qquad (1)$$

   , the local I/C ratio being measured according to the description.

2. The fuel cell electrode catalyst layer (3) according to claim 1, wherein the polymer electrolyte (31) is a crystalline polymer electrolyte (31).

3. The fuel cell electrode catalyst layer (3) according to claim 1 or 2, wherein the polymer electrolyte (31) has a polyfluorocarbon skeleton.

4. A fuel cell membrane electrode assembly (10) comprising the fuel cell electrode catalyst layer (3) as set forth in any one of claims 1 to 3.

5. A fuel cell comprising the fuel cell membrane electrode assembly (10) as set forth in claim 4.

6. A vehicle comprising the fuel cell set forth in claim 5.

7. A method for manufacturing a fuel cell electrode catalyst layer (3) as set forth in any one of claims 1 to 3, the fuel cell electrode catalyst layer (3) including a catalyst (20, 20') which includes a catalyst carrier (23, 23') and a catalyst metal (22, 22') carried on the catalyst carrier (23, 23'), and a polymer electrolyte (31),
wherein the method comprises:

- forming a coating film of a catalyst ink containing the catalyst (20, 20') and the polymer electrolyte (31); and
- heat-treating the coating film at a temperature equal to or higher than a glass transition temperature of the polymer electrolyte (31), and

wherein:

- a BET specific surface area of the catalyst carrier (23, 23') is more than 850 ($m^2$/g carrier), the BET specific surface area being measured according to the description and
- the polymer electrolyte (31) contains a sulfonic acid group as a cation-exchange group and the sulfonic acid group is contained in an amount of 1.2 (mmol/g carrier) or more.

8. The method according to claim 7, wherein:

- the catalyst ink contains the polymer electrolyte (31) at a weight ratio of 0.9 or more with respect to the catalyst carrier (23, 23'), and
- an equivalent weight (EW) of the polymer electrolyte (31) is 1000 g/mol or less.

9. The method according to claim 7 or 8, wherein the polymer electrolyte (31) has a polyfluorocarbon skeleton.

10. The method according to claim 7, wherein the heat treatment is conducted at a temperature higher than Tg + 20°C, wherein Tg is a glass transition temperature of the polymer electrolyte (31).


**Patentansprüche**

1. Brennstoffzellenelektrodenkatalysatorschicht (3), umfassend:

- einen Katalysator (20, 20'), der einen Katalysatorträger (23, 23') und ein Katalysatormetall (22, 22') umfasst, das auf dem Katalysatorträger (23, 23') getragen ist; und
- einen Polymerelektrolyten (31),

wobei:

- eine spezifische Oberfläche nach BET des Katalysatorträgers (23, 23') mehr als 850 ($m^2$/g Träger) beträgt, wobei die spezifische Oberfläche nach BET gemäß der Beschreibung gemessen wird,
- der Polymerelektrolyt (31) eine Sulfonsäuregruppe als Kationenaustauschgruppe enthält und die Sulfonsäuregruppe in einer Menge von 1,2 (mmol/g Träger) oder mehr enthalten ist, und
- ein Maximalwert (Imax) und ein Minimalwert (Imin) eines lokalen I/C-Verhältnisses die folgende mathematische Formel (1) erfüllen:

$$Imax/Imin \geq 2{,}5, \quad (1)$$

wobei das lokale I/C-Verhältnis gemäß der Beschreibung gemessen wird.

2. Brennstoffzellenelektrodenkatalysatorschicht (3) nach Anspruch 1, wobei der Polymerelektrolyt (31) ein kristalliner Polymerelektrolyt (31) ist.

3. Brennstoffzellenelektrodenkatalysatorschicht (3) nach Anspruch 1 oder 2, wobei der Polymerelektrolyt (31) ein Polyfluorkohlenstoffgerüst hat.

4. Brennstoffzellenmembranelektrodenanordnung (10), die die BrennstoffzellenelektrodenKatalysatorschicht (3) nach einem der Ansprüche 1 bis 3 aufweist.

5. Brennstoffzelle, die die Brennstoffzellenmembranelektrodenanordnung (10) nach Anspruch 4 aufweist.

6. Fahrzeug, das die Brennstoffzelle nach Anspruch 5 aufweist.

7. Verfahren zur Herstellung einer Brennstoffzellenelektrodenkatalysatorschicht (3) nach einem der Ansprüche 1 bis 3, wobei die Brennstoffzellenelektrodenkatalysatorschicht (3) einen Katalysator (20, 20'), der einen Katalysatorträger (23, 23') und ein Katalysatormetall (22, 22') umfasst, das auf dem Katalysatorträger (23, 23') getragen ist, und einen Polymerelektrolyten (31) umfasst,
wobei das Verfahren umfasst:

- Bilden eines Beschichtungsfilms aus einer Katalysatortinte, die den Katalysator (20, 20') und den Polymerelektrolyten (31) enthält; und
- Wärmebehandeln des Beschichtungsfilms bei einer Temperatur, die gleich oder höher als eine Glasübergangstemperatur des Polymerelektrolyten (31) ist, und

wobei:

- eine spezifische Oberfläche nach BET des Katalysatorträgers (23, 23') mehr als 850 ($m^2$/g Träger) beträgt, wobei die spezifische Oberfläche nach BET gemäß Beschreibung gemessen wird und
- der Polymerelektrolyt (31) eine Sulfonsäuregruppe als Kationenaustauschgruppe enthält und die Sulfonsäuregruppe in einer Menge von 1,2 (mmol/g Träger) oder mehr enthalten ist.

8. Verfahren nach Anspruch 7, wobei:

- die Katalysatortinte den Polymerelektrolyten (31) in einem Gewichtsverhältnis von 0,9 oder mehr in Bezug auf den Katalysatorträger (23, 23') enthält, und
- ein Äquivalentgewicht (EW) des Polymerelektrolyten (31) 1000 g/mol oder weniger beträgt.

9. Verfahren nach Anspruch 7 oder 8, wobei der Polymerelektrolyt (31) ein Polyfluorkohlenstoffgerüst hat.

10. Verfahren nach Anspruch 7, wobei die Wärmebehandlung bei einer Temperatur durchgeführt wird, die höher als Tg + 20 °C ist, wobei Tg eine Glasübergangstemperatur des Polymerelektrolyten (31) ist.

**Revendications**

1. Couche de catalyseur d'électrode de pile à combustible (3) comprenant :

- un catalyseur (20, 20') qui comporte un support de catalyseur (23, 23') et un métal catalytique (22, 22') supporté sur le support de catalyseur (23, 23') ; et
- un électrolyte polymère (31),

dans laquelle :

- une surface spécifique BET du support de catalyseur (23, 23') est supérieure à 850 ($m^2$/g de support), la surface spécifique BET étant mesurée selon la description,
- l'électrolyte polymère (31) contient un groupe acide sulfonique en tant que groupe échangeur de cations et le groupe acide sulfonique est présent en une quantité supérieure ou égale à 1,2 (mmol/g de support), et
- une valeur maximale (Imax) et une valeur minimale (Imin) d'un rapport I/C local satisfont la formule mathématique (1) suivante :

$$Imax/Imin \geq 2,5 \qquad\qquad (1)$$

le rapport I/C local étant mesuré selon la description.

2. Couche de catalyseur d'électrode de pile à combustible (3) selon la revendication 1, dans laquelle l'électrolyte polymère (31) est un électrolyte polymère cristallin (31).

3. Couche de catalyseur d'électrode de pile à combustible (3) selon la revendication 1 ou 2, dans laquelle l'électrolyte polymère (31) a un squelette en polyfluorocarbone.

4. Ensemble électrode à membrane de pile à combustible (10) comprenant la couche de catalyseur d'électrode de pile à combustible (3) selon l'une quelconque des revendications 1 à 3.

5. Pile à combustible comprenant l'ensemble électrode à membrane de pile à combustible (10) selon la revendication 4.

6. Véhicule comprenant la pile à combustible selon la revendication 5.

7. Procédé de fabrication d'une couche de catalyseur d'électrode de pile à combustible (3) selon l'une quelconque des revendications 1 à 3, la couche de catalyseur d'électrode de pile à combustible (3) comportant un catalyseur (20, 20') qui comporte un support de catalyseur (23, 23') et un métal catalytique (22, 22') supporté sur le support de catalyseur (23, 23') et un électrolyte polymère (31),
dans lequel le procédé comprend le fait :

   - de former un film de revêtement d'une encre catalytique contenant le catalyseur (20, 20') et l'électrolyte polymère (31) ; et
   - de traiter thermiquement le film de revêtement à une température supérieure ou égale à une température de transition vitreuse de l'électrolyte polymère (31) ; et

dans lequel :

   - une surface spécifique BET du support de catalyseur (23, 23') est supérieure à 850 (m$^2$/g de support), la surface spécifique BET étant mesurée selon la description et
   - l'électrolyte polymère (31) contient un groupe acide sulfonique en tant que groupe échangeur de cations et le groupe acide sulfonique est présent en une quantité supérieure ou égale à 1,2 (mmol/g de support).

8. Procédé selon la revendication 7, dans lequel :

   - l'encre catalytique contient l'électrolyte polymère (31) à un rapport pondéral supérieur ou égal à 0,9 par rapport au support de catalyseur (23, 23'), et
   - un poids équivalent (EW) de l'électrolyte polymère (31) est inférieur ou égal à 1000 g/mol.

9. Procédé selon la revendication 7 ou 8, dans lequel l'électrolyte polymère (31) a un squelette en polyfluorocarbone.

10. Procédé selon la revendication 7, dans lequel le traitement thermique est effectué à une température supérieure à Tg + 20°C, où Tg est une température de transition vitreuse de l'électrolyte polymère (31).

FIG. 1

FIG. 2

FIG. 3

20'

22'

23'

24'

20nm

FIG. 4

30

31

22

23

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013020816 A
- EP 3214679 A
- EP 3214681 A1
- JP 2010208887 A
- US 2011318254 A
- WO 200975264 A
- US 2011058308 A

### Non-patent literature cited in the description

- **SEIICHI KONDO ; ATSUO ISHIKAWA ; IKUO ABE.** Science of Adsorption. MARUZEN Co., Ltd,
- Fuel Cell Characterization Methods. Kagaku-Dojin Publishing Co., Inc,
- **R. SH. MIKHAIL ; S. BRUNAUER ; E. E. BODOR.** *J. Colloid Interface Sci.,* 1968, vol. 26, 45
- **SEIICHI KONDO ; TATSUO ISHIKAWA ; IKUO ABE.** Science of Adsorption. MARUZEN Co., Ltd,
- **D. DOLLION ; G. R. HEAL.** *J. Appl. Chem.,* 1964, vol. 14, 109
- *Journal of Electroanalytical Chemistry,* 2013, vol. 693, 34-41